(19) Europäisches Patentamt
European Patent Office
Office européen des brevets

(11) EP 1 837 374 A1

(12) **EUROPEAN PATENT APPLICATION**
published in accordance with Art. 158(3) EPC

(43) Date of publication:
**26.09.2007 Bulletin 2007/39**

(21) Application number: **05822536.8**

(22) Date of filing: **27.12.2005**

(51) Int Cl.:
***C08L 65/00*** *(2006.01)* ***C08J 5/18*** *(2006.01)*
***C08L 33/24*** *(2006.01)* ***G02B 5/30*** *(2006.01)*

(86) International application number:
**PCT/JP2005/023977**

(87) International publication number:
**WO 2006/073102 (13.07.2006 Gazette 2006/28)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.01.2005 JP 2005000920**

(71) Applicant: **JSR Corporation**
**Tokyo 104-0045 (JP)**

(72) Inventors:
- **MIYAKI, Nobuyuki**
  **c/o JSR CORPORATION**
  **Chuo-ku, Tokyo 104-0045 (JP)**
- **MIYAMOTO, Yoshikazu**
  **c/o JSR CORPORATION**
  **Chuo-ku, Tokyo 104-0045 (JP)**
- **KAWASHIMA, Naoyuki**
  **c/o JSR CORPORATION**
  **Chuo-ku, Tokyo 104-0045 (JP)**
- **KAJIWARA, Ichiro**
  **c/o JSR CORPORATION**
  **Chuo-ku, Tokyo 104-0045 (JP)**
- **YOSHIDA, Soichi**
  **c/o JSR CORPORATION**
  **Chuo-ku, Tokyo 104-0045 (JP)**

(74) Representative: **TBK-Patent**
**Bavariaring 4-6**
**80336 München (DE)**

# (54) THERMOPLASTIC RESIN COMPOSITION, OPTICAL FILM, AND PROCESS FOR PRODUCING FILM

(57) The present invention is intended to provide a thermoplastic resin composition which is inhibited from suffering phase separation and from which an optical film having excellent transparency is readily obtained, an optical film containing the composition as a main component, a retardation film which is a film obtained by stretching the optical film and exhibits positive wavelength dependence and has a small coefficient of photoelasticity and transparency, and a process for producing the retardation film. The thermoplastic resin composition contains (A) a cycloolefin-based polymer and (B) a vinyl-based polymer having a unit represented by the following formula (II):

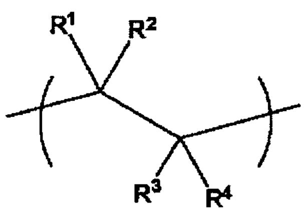
(II)

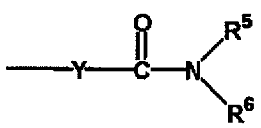
(III)

wherein at least one of $R^1$ to $R^4$ is a group represented by the formula (III), the remainder of $R^1$ to $R^4$, if any, and $R^5$ and $R^6$ are each a hydrogen atom, a halogen atom, a (substituted) hydrocarbon group which may have a linkage containing a hetero atom, or a polar group, $R^5$ and $R^6$ may be bonded to each other to form a monocyclic or polycyclic group which may have a hetero atom, or may be united to form a divalent hydrocarbon group, and Y is a divalent hydrocarbon group.

EP 1 837 374 A1

Fig. 5

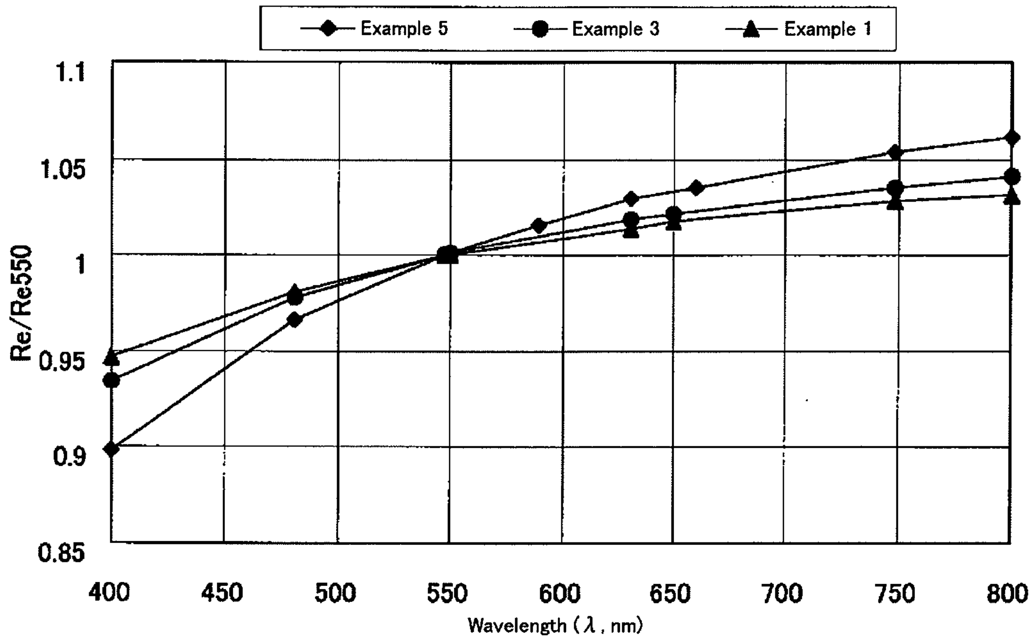
Example 5
Example 3
Example 1
1.1
1.05
1
0.95
0.9
0.85
Re/Re550
400
450
500
550
600
650
700
750
800
Wavelength (λ, nm)

## Description

### TECHNICAL FIELD

The present invention relates to a thermoplastic resin composition comprising a cycloolefin-based resin and a vinyl-based polymer containing a structural unit having an amide group, an optical film containing the thermoplastic resin composition as a main component, and a process for producing the film. More particularly, the invention relates to an optical film which has excellent adhesion or bonding property to other materials, is highly transparent, gives retardation of high uniformity to a transmitted light and has properties that as the wavelength of a transmitted light becomes longer, the absolute value of retardation becomes larger (also referred to as "positive wavelength dependence" hereinafter), and a process for producing the film.

### BACKGROUND ART

Because films of polycarbonate, polyester, etc., which have been used as optical films in the past, have high coefficient of photoelasticity, a problem of change of retardation takes place. For example, change of extremely small stress causes development of retardation of a transmitted light. Acetate films such as triacetyl acetate films exhibit low heat resistance and have a problem of deformation due to water absorption.
Thermoplastic norbornene-based resins (cycloolefin-based resins) have merits such that they have high glass transition temperature and high light transmittance and exhibit lower birefringence due to small anisotropy of refractive index as compared with conventional optical films. Therefore, these resins have been paid attention as transparent thermoplastic resins having excellent heat resistance, transparency and optical properties, and they are described in, for example, the patent document 1, the patent document 2, the patent document 3, the patent document 4, the patent document 5 and the patent document 6.

Taking advantage of the above features, application of the cycloolefin-based resins to fields of, for example, electron/optical materials, such as optical discs, optical lenses, optical fibers, transparent plastic substrates and low dielectric materials, and sealing materials for optical semiconductor sealing, is now under examination.
The above properties of the cycloolefin-based resins can improve the problems of the conventional resins even when these resins are considered to be resins for optical films. On this account, films formed from the cycloolefin-based resins have been proposed as various optical films.

For example, in the patent document 7, the patent document 8 and the patent document 9, retardation plates using films of cycloolefin-based resins are described. In the patent document 10, the patent document 11 and the patent document 12, it is described to use a film of a cycloolefin-based resin as a protective film of a polarizing plate. In the patent document 13, a substrate for a liquid crystal display device, which comprises a film of a cycloolefin-based resin, is described.

With regard to a function of retardation films to give retardation (birefringence) to a transmitted light, the function being obtained by stretch orientation, the retardation films generally have properties that as the wavelength of a transmitted light becomes longer, the absolute value of retardation (birefringence) of the transmitted light becomes smaller (negative wavelength dependence). Because of the properties, it is extremely difficult to give a specific retardation such as 1/4 wavelength to a transmitted light in the whole visible region (400 to 800 nm). In fact, for reflection type or semi-transmission type liquid crystal displays or optical disc pickups, a function as 1/4 wavelength is necessary in the wavelength region (400 to 800 nm) where the range of retardation is wide. For liquid crystal projectors, retardation of $1/2\lambda$ is necessary, and in the case of optical films made from the conventional cycloolefin-based resins, it is difficult to obtain such retardation by other means than a means of laminating films. In the lamination of films, however, steps of putting the films together, cutting them, bonding them, etc. become complicated, and besides, it becomes difficult to decrease a thickness of the resulting optical film.

On the other hand, for liquid crystal TV apparatuses using transmission type liquid crystal displays (particularly VA (vertically aligned) mode), high resolution displaying with a wide angle of field and high luminance, is necessary more than ever, as the sizes of the displays are increased. In the transmission type liquid crystal display in which two polarizing plates are used under the crossed-Nicols condition (the condition where transmission axes of the polarizing plates meet at right angles), if the position at which the display is observed is changed to the oblique direction from the front of the display, the angle between the transmission axes of the two polarizing plates seemingly deviates from 90 degrees, and therefore, there occur problems such as light leakage and decoloring (coloring) in the black display. In order to solve such problems, various retardation films are interposed between the liquid crystal cell and each polarizing plate to compensate for dependence of the polarizing plate on the angle of field, but satisfactory quality has not been obtained yet.

In order to solve the above problems, optical films exhibiting properties that as the wavelength becomes longer, the absolute value of retardation of a transmitted light becomes larger, that is, optical films exhibiting positive wavelength

dependence are necessary. As the optical films exhibiting such positive wavelength dependence, a retardation film comprising a specific cellulose acetate-based resin and a retardation film comprising a blend containing a polycarbonate-based resin or a blend containing a styrene-based resin are proposed in the patent documents 14, 15 and 16. However, the film comprising the cellulose-based resin has a problem of property change due to water absorption and problems in heat resistance and the like. In the case of the polycarbonate-based resin, stretching at a high temperature is necessary because the resin has a high glass transition temperature, and besides, the film of the resin suffers optical strain due to stress because the film has a high coefficient of photoelasticity. In the case of the styrene-based resin, a highly volatile solvent, such as methylene chloride having excellent film forming property, cannot be used because phase separation occurs in almost all the cases, so that a specific solvent must be selected. On this account, it takes a long time to dry the solvent, and the productivity is markedly lowered. Moreover, there is a problem that it is difficult to obtain a film of high transparency.

Accordingly, development of a resin composition which is inhibited from suffering phase separation and from which a transparent optical film can be readily obtained and a retardation film which contains the resin composition as a main component, exhibits positive wavelength dependence and has a low coefficient of photoelasticity and transparency has been eagerly desired.

Patent document 1: Japanese Patent Laid-Open Publication No. 132625/1989
Patent document 2: Japanese Patent Laid-Open Publication No. 132626/1989
Patent document 3: Japanese Patent Laid-Open Publication No. 218726/1988
Patent document 4: Japanese Patent Laid-Open Publication No. 133413/1990
Patent document 5: Japanese Patent Laid-Open Publication No. 120816/1986
Patent document 6: Japanese Patent Laid-Open Publication No. 115912/1986
Patent document 7: Japanese Patent Laid-Open Publication No. 245202/1992
Patent document 8: Japanese Patent Laid-Open Publication No. 2108/1993
Patent document 9: Japanese Patent Laid-Open Publication No. 64865/1993
Patent document 10: Japanese Patent Laid-Open Publication No. 212828/1993
Patent document 11: Japanese Patent Laid-Open Publication No. 51117/1994
Patent document 12: Japanese Patent Laid-Open Publication No. 77608/1995
Patent document 13: Japanese Patent Laid-Open Publication No. 61026/1993
Patent document 14: Japanese Patent Laid-Open Publication No. 137116/2000
Patent document 15: Japanese Patent Laid-Open Publication No. 337222/2000
Patent document 16: Japanese Journal of Polymer Science and Technology, Vol. 61, No. 1, 89-94 (2004)

## DISCLOSURE OF THE INVENTION

## PROBLEM TO BE SOLVED BY THE INVENTION

It is an object of the present invention to provide a thermoplastic resin composition which is inhibited from suffering phase separation, by the use of which film formation can be readily performed and from which an optical film having excellent transparency is obtained, and to provide an optical film which contains the resin composition as a main component, exhibits positive wavelength dependence in the whole wavelength region of 400 to 800 nm, can give a specific retardation to a transmitted light in this wavelength region by one film and has low water absorption and a low coefficient of photoelasticity, and a process for producing the optical film.

## MEANS TO SOLVE THE PROBLEM

According to the present invention, the following thermoplastic resin composition, an optical film containing the thermoplastic resin composition as a main component, and a process for producing the optical film are provided, and the above object of the invention is attained.

(1) A thermoplastic resin composition comprising:

(A) a cycloolefin-based polymer, and
(B) a vinyl-based polymer having a structural unit represented by the following formula (II):

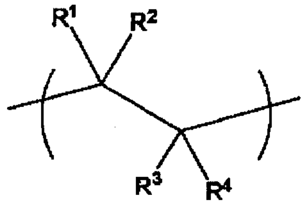

(II)

wherein at least one of $R^1$, $R^2$, $R^3$ and $R^4$ is a group having an amide moiety represented by the following formula (III), and the remainder of $R^1$, $R^2$, $R^3$ and $R^4$, if any, are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group,

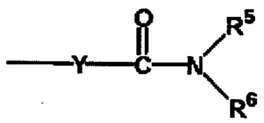

(III)

wherein $R^5$ and $R^6$ are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group, and may be bonded to each other to form a monocyclic or polycyclic group which may have a hetero atom, or may be united to form a divalent hydrocarbon group, and Y is a divalent hydrocarbon group of 1 to 10 carbon atoms or a divalent aromatic ring.

(2) The thermoplastic resin composition as stated in (1), wherein the cycloolefin-based polymer (A) is a polymer obtained from a monomer represented by the following formula (I):

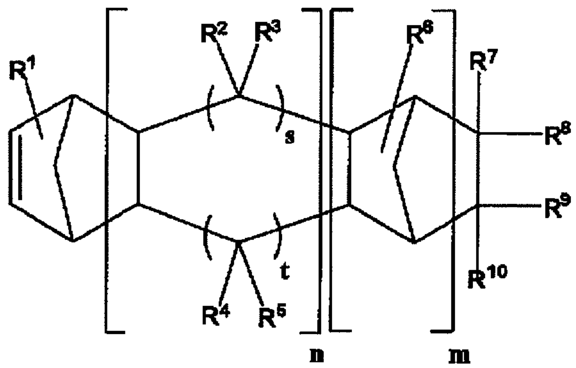

(I)

wherein m, n, s and t are each independently an integer of 0 to 2, $R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, and may be bonded to each other to form a monocyclic or polycyclic group which may have a hetero atom, $R^7$ and $R^8$, or $R^9$ and $R^{10}$ may be united to form a divalent hydrocarbon group, and $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure).

(3) The thermoplastic resin composition as stated in (1) or (2), wherein the cycloolefin-based polymer (A) has

a structural unit represented by the following formula (IV):

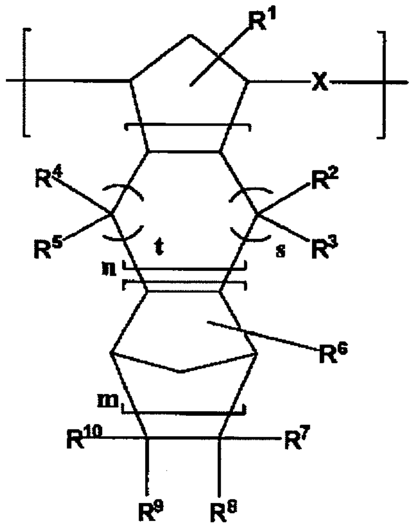

(IV)

wherein m, n, s and t are each independently an integer of 0 to 2, $R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, and may be bonded to each other to form a monocyclic or polycyclic group which may have a hetero atom, $R^7$ and $R^8$, or $R^9$ and $R^{10}$ may be united to form a divalent hydrocarbon group, $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure), X is a group represented by the formula -CH=CH- or a group represented by the formula $-CH_2CH_2-$, and plural X may be the same or different.

(4) The thermoplastic resin composition as stated in any one of (1) to (3), wherein the vinyl-based polymer (B) is obtained by mixing a vinyl-based polymer (C) obtained from a polar group-containing monomer and an aromatic vinyl-based monomer with a compound represented by the following formula (V):

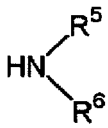

(V)

wherein $R^5$ and $R^6$ have the same meanings as those of $R^5$ and $R^6$ in the formula (III).

(5) The thermoplastic resin composition as stated in (4), wherein the polar group-containing monomer is an acid anhydride-containing monomer.

(6) The thermoplastic resin composition as stated in any one of (1) to (5), wherein the vinyl-based polymer (B) is contained in an amount of 20 to 200 parts by weight based on 100 parts by weight of the cyclopolyolefin-based polymer (A).

(7) An optical film containing the thermoplastic resin composition of any one of (1) to (6) as a main component.

(8) The optical film as stated in (7), which gives retardation to a transmitted light.
(9) The optical film as stated in (8), which has properties that the ratio of a retardation Re(400) at a wavelength of 400 nm to a retardation Re(550) at a wavelength of 550 nm, Re(400)/Re(550), is in the range of 1.0 to 0.1, and the ratio of a retardation Re(800) at a wavelength of 800 nm to a retardation Re(550) at a wavelength of 550 nm, Re (800)/Re(550), is in the range of 1.5 to 1.0.

(10) A process for producing an optical film, comprising forming the thermoplastic resin composition of any one of (1) to (6) into the film using a solution casting method.

(11) A process for producing an optical film, comprising forming the thermoplastic resin composition of any one of (1) to (6) into the film using a melt extrusion method.

EFFECT OF THE INVENTION

According to the present invention, there is obtained a resin composition which has excellent compatibility and transparency and can exhibit low birefringence by controlling the compositional ratio, and there is provided an optical film of the resin composition which exhibits positive wavelength dispersion properties when it is subjected to stretch orientation and has excellent adhesion or bonding property to other materials. Accordingly, when the optical film of the invention is used as a retardation film, a λ plate exhibiting a fixed retardation in the wavelength region of 400 to 800 nm can be realized by one retardation film. Moreover, the optical film of the invention is useful also as an optical film having functions, such as transparent electrical conduction and antireflection function.

BRIEF DESCRIPTION OF THE DRAWINGS

Fig. 1 shows an IR spectrum of the resin P1 obtained in Polymer Synthesis Example 1.
Fig. 2 shows a $^1$H-NMR spectrum of the resin P1 obtained in Polymer Synthesis Example 1.
Fig. 3 shows an IR spectrum of the resin P3 obtained in Polymer Synthesis Example 3.
Fig. 4 shows a $^1$H-NMR spectrum of the resin P3 obtained in Polymer Synthesis Example 3.
Fig. 5 shows wavelength dispersion properties of the retardation films produced in Examples 1, 3 and 5.

BEST MODE FOR CARRYING OUT THE INVENTION

The thermoplastic resin composition of the invention comprises (A) a cycloolefin-based polymer and (B) a vinyl-based polymer containing a structural unit having an amide group.

(A) Cycloolefin-based polymer

As the cycloolefin-based polymer (A) contained in the thermoplastic resin composition of the invention, there can be mentioned the following polymers (1) to (4):

(1) a ring-opened polymer of the monomer represented by the following formula (I) (also referred to as the "specific monomer" hereinafter),
(2) a ring-opened copolymer of the specific monomer and a copolymerizable monomer,
(3) a hydrogenation product of the ring-opened polymer (1) or (2), and
(4) an addition type polymer of the specific monomer and a vinyl-based compound.

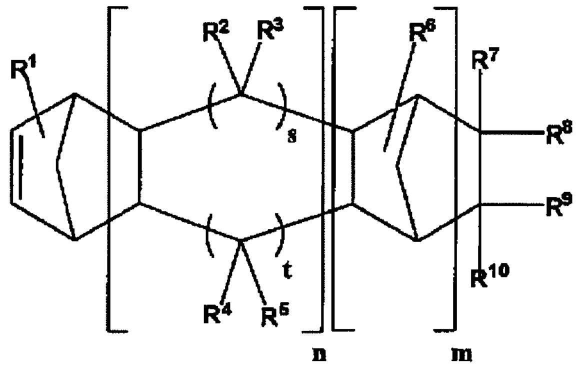

(I)

In the formula (I), m, n, s and t are each independently an integer of 0 to 2, $R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, and may be bonded to each other to form a monocyclic or polycyclic group which may have a hetero atom, $R^7$ and $R^8$, or $R^9$ and $R^{10}$ may be united to form a divalent hydrocarbon group, and $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure).

Examples of the halogen atoms include a fluorine atom, a chlorine atom and a bromine atom.
Examples of the hydrocarbon groups of 1 to 30 carbon atoms include alkyl groups, such as methyl, ethyl and propyl; cycloalkyl groups, such as cyclopentyl and cyclohexyl; and alkenyl groups, such as vinyl, allyl and propenyl.
The above substituted or unsubstituted hydrocarbon group may be directly bonded to the ring structure, or may be bonded thereto through a linkage. The linkage is, for example, a divalent hydrocarbon group of 1 to 10 carbon atoms (e.g., alkylene group represented by the formula $-(CH_2)_m-$ wherein m is an integer of 1 to 10), or a linkage containing oxygen, nitrogen, sulfur or silicon (e.g., carbonyl group (-CO-), oxycarbonyl group (-O(CO)-), sulfone group ($-SO_2-$), ether bond (-O-), thioether bond (-S-), imino group (-NH-), amide bond (-NHCO-, -CONH-) or siloxane bond (-OSi(R)- wherein R is an alkyl group such as methyl or ethyl)). A linkage containing two or more of the above groups and bonds is also available.

Examples of the polar groups include a hydroxyl group, an alkoxy group of 1 to 10 carbon atoms, a carbonyloxy group, an alkoxycarbonyl group, an aryloxycarbonyl group, a cyano group, an amide group, an imide group, a triorganosiloxy group, a triorganosilyl group, an amino group, an acyl group, an alkoxysilyl group, a sulfonyl group and a carboxyl group. Specific examples of the alkoxy groups include methoxy and ethoxy; specific examples of the carbonyloxy groups include alkylcarbonyloxy groups, such as acetoxy and propionyloxy, and arylcarbonyloxy groups, such as benzoyloxy; specific examples of the alkoxycarbonyl groups include methoxycarbonyl and ethoxycarbonyl; specific examples of the aryloxycarbonyl groups include phenoxycarbonyl, naphthyloxycarbonyl, fluorenyloxycarbonyl and biphenylyloxycarbonyl; specific examples of the triorganosiloxy groups include trimethylsiloxy and triethylsiloxy; specific examples of the triorganosilyl groups include trimethylsilyl and triethylsilyl; specific examples of the amino groups include primary amino group; and specific examples of the alkoxysilyl groups include trimethoxysilyl and triethoxysilyl.

Examples of the specific monomers represented by the formula (I) include the following compounds:

bicyclo[2.2.1]hept-2-ene,
tricyclo [4.3.0.$1^{2,5}$]-3-decene,
tricyclo [4.4.0.$1^{2,5}$]-3-undecene,
tetracyclo [4.4.0.$1^{2,5}$.$1^{7,10}$]-3-dodecene,
pentacyclo [6.5.1.$1^{3,6}$.$0^{2,7}$.$0^{9,13}$]-4-pentadecene,
pentacyclo [7.4.0.$1^{2,5}$.$1^{9,12}$.$0^{8,13}$]-3-pentadecene,
5-methylbicyclo[2.2.1]hept-2-ene,
5-ethylbicyclo[2.2.1]hept-2-ene,
5-methoxycarbonylbicyclo[2.2.1]hept-2-ene,
5-methyl-5-methoxycarbonylbicyclo[2.2.1]hept-2-ene,

5-cyanobicyclo[2.2.1]hept-2-ene,
8-methoxycarbonyltetracyclo[4.4.0.$1^{2,5}$.$1^{7,10}$]-3-dodecene,
8-ethoxycarbonyltetracyclo [4.4.0.$1^{2,5}$.$1^{7,10}$]-3-dodecene,
8-n-propoxycarbonyltetracyclo[4.4 .0.$1^{2,5}$.$1^{7,10}$]-3-dodecene,
8-isopropoxycarbonyltetracyclo [4.4.0.$1^{2,5}$.$1^{7,10}$]-3-dodecene,
8-n-butoxycarbonyltetracyclo [4.4.0.$1^{2,5}$.$1^{7,10}$]-3-dodecene,
8-phenoxycarbonyltetracyclo[4.4.0.$1^{2,5}$. $1^{7,10}$]-3-dodecene,
8-(1-naphthoxy)carbonyltetracyclo[4.4.0.$1^{2,5}$.$1^{7,10}$]-3-dodecene,
8-(2-naphthoxy)carbonyltetracyclo[4.4.0.$1^{2,5}$.$1^{7,10}$]-3-dodecene,
8-(4-phenylphenoxy) carbonyltetracyclo [4.4.0.$1^{2,5}$.$1^{7,10}$]-3-dodecene,
8-methyl-8-methoxycarbonyltetracyclo [4.4.0.$1^{2,5}$.$1^{7,10}$] -3-dodecene,
8-methyl-8-ethoxycarbonyltetracyclo [4.4.0.$1^{2,5}$.$1^{7,10}$]-3-dodecene,
8-methyl-8-n-propoxycarbonyltetracyclo [4.4.0.$1^{2,5}$.$1^{7,10}$]-3-dodecene,
8-methyl-8-isopropoxycarbonyltetracyclo [4.4.0.$1^{2,5}$.$1^{7,10}$]-3-dodecene,
8-methyl-8-n-butoxycarbonyltetracyclo [4.4.0.$1^{2,5}$.$1^{7,10}$]-3-dodecene,
8-methyl-8-phenoxycarbonyltetracyclo [4.4.0.$1^{2,5}$.$1^{7,10}$]-3-dodecene,
8-methyl-8-(1-naphthoxy) carbonyltetracyclo [4.4.0.$1^{2,5}$.$1^{7,10}$]-3-dodecene,
8-methyl-8-(2-naphthoxy) carbonyltetracyclo [4.4.0.$1^{2,5}$.$1^{7,10}$]-3-dodecene,
8-methyl-8-(4-phenylphenoxy) carbonyltetracyclo [4.4.0.$1^{2,5}$.$1^{7,10}$]-3-dodecene,
pentacyclo [8.4.0.$1^{2,5}$.$1^{9,12}$.$0^{8,13}$]-3-hexadecene,
heptacyclo [8.7.0.$1^{3,6}$.$1^{10,17}$.$1^{12,15}$.$0^{2,7}$.$0^{11,16}$]-4-eicosene,
heptacyclo [8.8.0.$1^{4,7}$.$1^{11,18}$.$1^{13,16}$.$0^{3,8}$.$0^{12,17}$]-5-heneicosene,
5-ethylidenebicyclo[2.2.1]hept-2-ene,
8-ethylidenetetracyclo [4.4.0.$1^{2,5}$.$1^{7,10}$]-3-dodecene,
5-phenylbicyclo[2.2.1]hept-2-ene,
5-phenyl-5-methylbicyclo[2.2.1]hept-2-ene,
8-phenyltetracyclo [4.4.0.$1^{2,5}$.$1^{7,10}$]-3-dodecene,
5-n-butylbicyclo[2.2.1]hept-2-ene,
5-n-hexylbicyclo[2.2.1]hept-2-ene,
5-cyclohexylbicyclo[2.2.1]hept-2-ene,
5-(2-cyclohexenyl)bicyclo[2.2.1]hept-2-ene,
5-n-octylbicyclo[2.2.1]hept-2-ene,
5-n-decylbicyclo[2.2.1]hept-2-ene,
5-isopropylbicyclo[2.2.1]hept-2-ene,
5-(1-naphthyl)bicyclo[2.2.1]hept-2-ene,
5-(2-naphthyl)bicyclo[2.2.1]hept-2-ene,
5-(2-naphthyl)-5-methylbicyclo[2.2.1]hept-2-ene,
5-(4-biphenyl)bicyclo[2.2.1]hept-2-ene,
5-(4-biphenyl)-5-methylbicyclo[2.2.1]hept-2-ene,
5-aminomethylbicyclo[2.2.1]hept-2-ene,
5-trimethoxysilylbicyclo[2.2.1]hept-2-ene,
5-triethoxysilylbicyclo[2.2.1]hept-2-ene,
5-tri-n-propoxysilylbicyclo[2.2.1]hept-2-ene,
5-tri-n-butoxysilylbicyclo[2.2.1]hept-2-ene,
5-chloromethylbicyclo[2.2.1]hept-2-ene,
5-hydroxymethylbicyclo[2.2.1]hept-2-ene,
5-cyclohexenylbicyclo[2.2.1]hept-2-ene,
5-fluorobicyclo[2.2.1]hept-2-ene,
5-fluoromethylbicyclo[2.2.1]hept-2-ene,
5-trifluoromethylbicyclo[2.2.1]hept-2-ene,
5,5-difluorobicyclo[2.2.1]hept-2-ene,
5,6-difluorobicyclo[2.2.1]hept-2-ene,
5,5-bis (trifluoromethyl)bicyclo[2.2.1]hept-2-ene,
5,6-bis(trifluoromethyl)bicyclo[2.2.1]hept-2-ene,
5-methyl-5-trifluoromethylbicyclo[2.2.1]hept-2-ene,
5,5,6-trifluorobicyclo[2.2.1]hept-2-ene,
5,5,6,6-tetrafluorobicyclo[2.2.1]hept-2-ene,
8-fluorotetracyclo [4.4.0.$1^{2,5}$.$1^{7,10}$] -3-dodecene,

8-fluoromethyltetracyclo [4.4.0.$1^{2,5}$.$1^{7,10}$] -3-dodecene,
8-trifluoromethyltetracyclo [4.4. 0.$1^{2,5}$.$1^{7,10}$]-3-dodecene, and
8, 8-difluorotetracyclo [4.4. 0.$1^{2,5}$.$1^{7,10}$] -3-dodecene.

These compounds can be used singly or in combination of two or more kinds, as norbornene-based monomers (I).
Of the specific monomers, the specific monomer wherein at least one of $R^7$ to $R^{10}$ in the formula (I) is a specific polar group represented by the following formula (VI) is preferable from the viewpoint that the resulting thermoplastic resin composition and optical film keep good balance between the heat resistance and the moisture (water) resistance.

$$-(CH_2)_nCOOR^{11} \qquad (IV)$$

In the above formula, n is usually 0 or an integer of 1 to 5, and $R^{11}$ is a hydrocarbon group of 1 to 15 carbon atoms.
The value of n and the number of carbon atoms of $R^{11}$ in the formula (VI) are preferably as small as possible, because as the value of n becomes smaller or the number of carbon atoms of $R^{11}$ becomes smaller, the resulting thermoplastic resin composition has a higher glass transition temperature and is more improved in the heat resistance. That is to say, although n is usually 0 or an integer of 1 to 5, it is preferably 0 or 1, and although $R^{11}$ is usually a hydrocarbon group of 1 to 15 carbon atoms, it is preferably an alkyl group of 1 to 4 carbon atoms.
Further, the specific monomer of the formula (I) wherein an alkyl group is further bonded to a carbon atom to which the polar group represented by the formula (VI) is bonded is preferable from the viewpoint that the resulting thermoplastic resin composition and optical film keep good balance between the heat resistance and the moisture (water) resistance. The number of carbon atoms of this alkyl group is preferably 1 to 5, more preferably 1 to 2, particularly preferably 1.
Of such specific monomers, preferable are 8-methyl-8-methoxycarbonyltetracyclo[4.4. 0.$1^{2,5}$.$1^{7,10}$]-3-dodecene, 8-methyl-8-ethoxycarbonyltetracyclo[4.4.0. $1^{2,5}$.$1^{7,10}$]-3-dodecene, 8-methyl-8-butoxycarbonyltetracyclo [4.4.0.$1^{2,5}$.$1^{7,10}$]-3-dodecene, and a combination of 8-methyl-8-methoxycarbonyltetracyclo[4.4.0.$1^{2'5}$.$1^{7'1}$]-3-dodecene and 5-methyl-5-methoxycarbonyl-bicyclo[2.2.1]hept-2-ene from the viewpoint that the resulting thermoplastic resin composition and optical film have excellent heat resistance, and particularly preferable are 8-methyl-8-methoxycarbonyltetracyclo [4.4.0.$1^{2,5}$.$1^{7,10}$]-3-dodecene, and a combination of 8-methyl-8-methoxycarbonyltetracyclo [4.4.0.$1^{2,5}$.$1^{7,10}$]-3-dodecene and 5-methyl-5-methoxycarbonyl-bicyclo[2.2.1]hept-2-ene from the viewpoint that a cycloolefin-based polymer having excellent compatibility with the vinyl-based polymer (B) is obtained.
The cycloolefin-based polymer obtained by ring-opening polymerization of the specific monomer is, for example, a polymer having the structural unit represented by the following formula (IV):
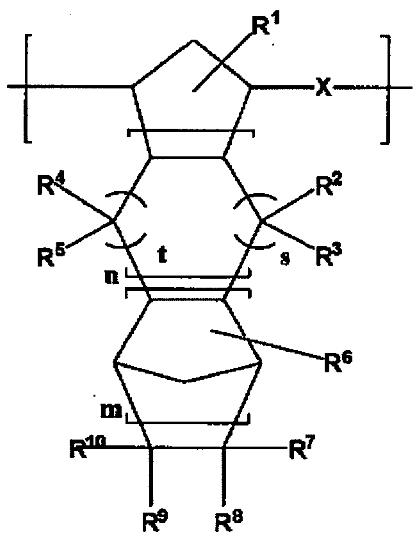

(IV)

wherein m, n, s, t and $R^1$ to $R^{10}$ have the same meanings as those of m, n, s, t and $R^1$ to $R^{10}$ in the formula (I), X is a group represented by the formula -CH=CH- or a group represented by the formula $-CH_2CH_2-$, and plural X may be the same or different.

Copolymerizable monomer

Although the specific monomer may be ring-opening polymerized alone, the specific monomer and another copolymerizable monomer may be ring-opening copolymerized.

Examples of the copolymerizable monomers include cycloolefins, such as cyclobutene, cyclopentene, cycloheptene and cyclooctene. The number of carbon atoms of the cycloolefin is in the range of preferably 4 to 20, more preferably 5 to 12. The specific monomer may be ring-opening polymerized in the presence of an unsaturated hydrocarbon-based polymer containing a carbon-carbon double bond in the main chain, such as polybutadiene, polyisoprene, a styrene/butadiene copolymer, an ethylene/non-conjugated diene copolymer or polynorbornene. In this case, the resulting ring-opened copolymer and its hydrogenated copolymer are each useful as a raw material of a thermoplastic resin composition having high impact resistance.

Ring-opened polymer

The ring-opened polymer (the formula (IV)) can be obtained by ring-opening polymerization of the specific monomer, and if necessary, the copolymerizable monomer, through a hitherto known process in the presence of a ring-opening polymerization catalyst and using, if necessary, a molecular weight modifier and a ring-opening polymerization solvent.

In the case where the specific monomer and the copolymerizable monomer are copolymerized, it is desirable to copolymerize the specific monomer in an amount of usually not less than 50% by weight and less than 100% by weight, preferably not less than 60% by weight and less than 100% by weight, more preferably not less than 70% by weight and less than 100% by weight, and the copolymerizable monomer in an amount of usually more than 0% by weight and not more than 50% by weight, preferably more than 0% by weight and not more than 40% by weight, more preferably more than 0% by weight and not more than 30% by weight, each amount being based on the total 100% by weight of the specific monomer and the copolymerizable monomer.

As the ring-opened polymer for use in the invention, a homopolymer of the specific monomer or a copolymer of two or more kinds of the specific monomers is most preferable.

Ring-opening polymerization catalyst

As the ring-opening polymerization catalyst used in the invention, a catalyst described in "Olefin Metathesis and Metathesis Polymerization" (K.J. IVIN, J.C. MOL, Academic Press, 1997) is preferably used.

Such a catalyst is, for example, a metathesis polymerization catalyst comprising a combination of (a) at least one compound selected from compounds of W, Mo, Re, V and Ti and (b) at least one compound selected from compounds containing Li, Na, K, Mg, Ca, Zn, Cd, Hg, B, Al, Si, Sn, Pb, etc. and having at least one bond of the element and carbon or hydrogen. In order to enhance catalytic activity, the later-described additive (c) may be added to the above catalyst.

As another catalyst, there can be mentioned (d) a metathesis catalyst comprising a periodic table Group 4 to Group 8 transition metal-carbene complex or metallocyclobutane complex, without cocatalysts.

Typical examples of the compounds of W, Mo, Re, V and Ti suitably used as the components (a) include compounds described in Japanese Patent Laid-Open Publication No. 240517/1989, such as $WCl_6$, $MoCl_5$, $ReOCl_3$, $VOCl_3$ and $TiCl_4$.

Examples of the components (b) include compounds described in Japanese Patent Laid-Open Publication No. 240517/1989, such as $n\text{-}C_4H_9Li$, $(C_2H_5)_3Al$, $(C_2H_5)_2AlCl$, $(C_2H_5)_{1.5}AlCl_{1.5}$, $(C_2H_5)AlCl_2$, methylalumoxane and LiH.

Typical examples of the components (c) (i.e., additives) preferably employable include alcohols, aldehydes, ketones and amines. Further, compounds described in Japanese Patent Laid-Open Publication No. 240517/1989 are also employable.

Typical examples of the catalysts (d) include $W(=N\text{-}2, 6\text{-}C_6H_3iPr_2)$ (=CHtBu) $(OtBu)_2$, Mo $(=N\text{-}2, 6\text{-}C_6H_3iPr_2)$ (=CHtBu) $(OtBu)_2$, $Ru(=CHCH=CPh_2)$ $(PPh_3)_2Cl_2$ and Ru (=CHPh) $(PC_6H_{11})_2Cl_2$.

The metathesis catalyst is desirably used in such an amount that the molar ratio between the component (a) and all the monomers (norbornene-based monomers (Im), (IIm) and other copolymerizable monomers, the same shall apply hereinafter) (compound (a):all the monomers) becomes usually 1:500 to 1:500,000, preferably 1:1,000 to 1:100,000. The molar ratio between the component (a) and the component (b) ((a):(b)) is desired to be in the range of usually 1:1 to 1:100, preferably 1:2 to 1:50, in terms of a metal atom ratio. When the additive (c) is added to the metathesis catalyst, the molar ratio between the component (c) and the component (a) ((c):(a)) is desired to be in the range of usually 0.005: 1 to 15:1, preferably 0.05:1 to 7:1. The catalyst (d) is desirably used in such an amount that the molar ratio between the component (d) and all the monomers (component (d):all the monomers) becomes usually 1:50 to 1:100,000, preferably 1:100 to 1:500,000.

Molecular weight modifier

The molecular weight of the ring-opened (co)polymer can be controlled by polymerization temperature, type of the catalyst and type of a solvent. In the present invention, however, the molecular weight is preferably controlled by allowing a molecular weight modifier to coexist in the reaction system. Examples of preferred molecular weight modifiers include α-olefins, such as ethylene, propylene, 1-butene, 1-pentene, 1-hexene, 1-heptene, 1-octene, 1-nonene and 1-decene; styrenes, such as styrene and vinyltoluene; and allyl compounds, such as allylacetic acid and allylbenzene. Of these, 1-butene, 1-hexene and 1-octene are particularly preferable. These molecular weight modifiers can be used singly or as a mixture of two or more kinds. The molecular weight modifier is desirably used in an amount of 0.001 to 0.6 mol, preferably 0.02 to 0.5 mol, based on 1 mol of all the monomers used in the ring-opening (co)polymerization reaction.

Solvent for ring-opening (co)polymerization reaction

Examples of the solvents for use in the ring-opening (co)polymerization reaction, namely, solvents to dissolve the norbornene-based monomer, the metathesis catalyst and the molecular weight modifier, include hydrocarbons, such as petroleum ether, pentane, hexane, heptane, octane, nonane and decane; cyclic hydrocarbons, such as cyclopentane, cyclohexane, methylcyclohexane, cycloheptane, cyclooctane, decalin and norbornane; aromatic hydrocarbons, such as benzene, toluene, xylene, ethylbenzene, cumene and chlorobenzene; halogenated hydrocarbons, such as dichloromethane, dichloroethane, chlorobutane, chloroform and tetrachloroethylene; esters, such as methyl acetate, ethyl acetate, n-butyl acetate, isobutyl acetate and methyl propionate; ethers, such as dibutyl ether, tetrahydrofuran, dimethoxyethane and dioxane; N,N-11-dimethylformamide; N,N-dimethylacetamide; and N-methylpyrrolidone. These solvents can be used singly or by mixing them. Of these, aromatic hydrocarbons are preferable in the present invention. The solvent is desirably used in such an amount that the ratio between the solvent and all the monomers (solvent:all the monomers, by weight) becomes usually 0.5:1 to 20:1, preferably 0.5:1 to 10:1.

Hydrogenation

In the present invention, the cycloolefin-based ring-opened polymer (A) may be prepared by the ring-opening polymerization only, but it is preferable to further hydrogenate the ring-opened polymer obtained by the ring-opening polymerization. In the case of the cycloolefin-based ring-opened polymer obtained by the ring-opening polymerization only, each X in the structural unit (IV) represented by the aforesaid formula (IV) is an olefinic unsaturated group represented by the formula -CH=CH-. Such a ring-opened polymer can be used as it is, but from the viewpoint of heat stability, it is preferable to use a hydrogenation product obtained by hydrogenating the olefinic unsaturated group to convert the X to a group represented by the formula $-CH_2-CH_2-$. However, the hydrogenation product referred to in the invention is a product wherein the olefinic unsaturated group has been hydrogenated but the aromatic ring of the side chain based on the cycloolefin-based monomer has not been substantially hydrogenated.

The degree of hydrogenation is desired to be not less than 90% by mol, preferably not less than 95%, more preferably not less than 97%, of X in the aforesaid structural unit (IV). As the degree of hydrogenation is increased, occurrence of coloring or deterioration due to heat can be inhibited more, so that the degree of hydrogenation is preferably high.

In this preparation process, the hydrogenation reaction needs to be carried out under such conditions that the aromatic ring of the side chain based on the monomer (I) is not substantially hydrogenated. On this account, the hydrogenation reaction is desirably carried out by adding a hydrogenation catalyst to a solution of the ring-opened polymer and allowing hydrogen to act thereon at atmospheric pressure to 30 MPa, preferably 2 to 20 MPa, more preferably 3 to 18 MPa.

As the hydrogenation catalyst, a catalyst that is used for usual hydrogenation reaction of an olefinic compound is employable. As such a hydrogenation catalyst, any of publicly known heterogeneous catalysts and homogeneous catalysts is employable. Examples of the heterogeneous catalysts include solid catalysts wherein precious metal catalytic substances, such as palladium, platinum, nickel, rhodium and ruthenium, are supported on carriers, such as carbon, silica, alumina and titania. Examples of the homogeneous catalysts include nickel naphthenate/triethylaluminum, bis(acetylacetonato)nickel(II)/triethylaluminum, cobalt octenate/n-butyllithium, titanocene dichloride/diethylaluminum monochloride, rhodium acetate, chlorotris(triphenylphosphine)rhodium, dichlorotris(triphenylphosphine)ruthenium, chlorohydrocarbonyltris(triphenylphosphine)ruthenium and dichlorocarbonyltris(triphenylphosphine)ruthenium. The catalysts may be in the form of powders or particles. These hydrogenation catalysts can be used singly or in combination of two or more kinds.

In order that the aromatic ring of the side chain based on the specific monomer (I) or other monomers should not be substantially hydrogenated, the amount of the hydrogenation catalyst added needs to be controlled. The hydrogenation catalyst is desirably used in such an amount that the ratio between the ring-opened (co)polymer and the hydrogenation catalyst (ring-opened (co)polymer:hydrogenation catalyst, by weight) becomes usually $1:1\times10^{-6}$ to 1:2.

Addition type polymer (saturated polymer)

In the present invention, in addition to the ring-opened polymer and its hydrogenated polymer, a saturated copolymer of the specific monomer and an unsaturated double bond-containing compound can be also used as the cycloolefin-based polymer (A). It is desirable to copolymerize the specific monomer in an amount of usually 50 to 90% by weight, preferably 60 to 90% by weight, more preferably 70 to 90% by weight, and the unsaturated double bond-containing compound in an amount of usually 10 to 50% by weight, preferably 10 to 40% by weight, more preferably 10 to 30% by weight, each amount being based on the total 100% by weight of the specific monomer and the unsaturated double bond-containing compound.

Examples of the unsaturated double bond-containing compounds include olefin-based compounds of 2 to 12 carbon atoms, preferably 2 to 8 carbon atoms, such as ethylene, propylene and butene.

As a catalyst for use in the copolymerization reaction of the specific monomer with the unsaturated double bond-containing compound, a catalyst comprising a vanadium compound and an organoaluminum compound can be mentioned. The vanadium compound is, for example, a vanadium compound represented by the formula $VO(OR)_aX_b$ or $V(OR)_cX_d$ (wherein R is a hydrocarbon group, $0 \leq a \leq 3$, $0 \leq b \leq 3$, $2 \leq a+b \leq 3$, $0 \leq c \leq 4$, $0 \leq d \leq 4$ and $3 \leq c+d \leq 4$) or an electron donor adduct thereof. Examples of the electron donors include oxygen-containing electron donors, such as alcohol, phenols, ketone, aldehyde, carboxylic acid, ester of organic acid or inorganic acid, ether, acid amide, acid anhydride and alkoxysilane; and nitrogen-containing electron donors, such as ammonia, amine, nitrile and isocyanate. The organoaluminum compound is, for example, at least one organoaluminum compound selected from compounds having at least one aluminum-carbon bond or aluminum-hydrogen bond. The proportion of the organoaluminum compound to the vanadium compound in the catalyst is as follows. That is to say, the ratio of the aluminum atom to the vanadium atom (Al/V) is usually not less than 2, preferably 2 to 50, particularly preferably 3 to 20.

Examples of solvents employable in the above copolymerization reaction include hydrocarbons, such as pentane, hexane, heptane, octane, nonane and decane; cyclic hydrocarbons, such as cyclohexane and methylcyclohexane; aromatic hydrocarbons such as benzene, toluene and xylene, and halogen derivatives thereof. Of these, cyclohexane and methylcyclohexane are preferable.

Cycloolefin-based polymer

The cycloolefin-based polymer (A) for use in the invention desirably has an intrinsic viscosity [$\eta_{inh}$], as measured in a chlorobenzene solution (concentration: 0.5 g/100 ml) at 30°C, of 0.2 to 5.0 dl/g. Further, the cycloolefin-based polymer (A) desirably has a number-average molecular weight (Mn) in terms of polystyrene, as measured by gel permeation chromatography (GPC), of usually 8,000 to 1,000,000, preferably 10,000 to 800,000, more preferably 20,000 to 500,000, and a weight-average molecular weight (Mw) of usually 10,000 to 3,000,000, preferably 20,000 to 2,000,000, more preferably 30,000 to 1,000,000.

If the molecular weight is too low, the strength of the resulting molded article or film is sometimes lowered. If the molecular weight is too high, the solution viscosity becomes too high, and hence, productivity or processability of the thermoplastic resin composition of the invention is sometimes deteriorated.

The cycloolefin-based polymer (A) desirably has a molecular weight distribution (Mw/Mn) of usually 1.5 to 10, preferably 2 to 8, more preferably 2 to 5.

The cycloolefin-based polymer (A) has a glass transition temperature (Tg) of usually 100 to 250°C, preferably 110 to 220°C, more preferably 115 to 200°C.

If Tg is too low, the heat distortion temperature is lowered, so that a problem of heat resistance is liable to occur, and besides, there sometimes occurs a problem that optical properties of the resulting molded article or film greatly change with temperature. On the other hand, if Tg is too high, the processing temperature needs to be raised, and thereby, the thermoplastic resin composition is sometimes thermally deteriorated.

Vinyl-based polymer (B)

The vinyl-based polymer (B) for use in the invention is characterized by having an amide group, and is a polymer having a structural unit represented by the following formula (II) (said structural unit being also referred to as the "structural unit (II)" hereinafter):

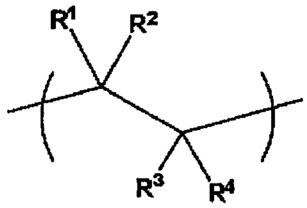

(II)

wherein at least one of $R^1$, $R^2$, $R^3$ and $R^4$ is a group having an amide moiety represented by the following formula (III), and the remainder of $R^1$, $R^2$, $R^3$ and $R^4$, if any, are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group,

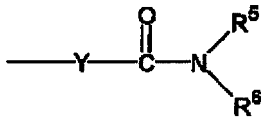

(III)

wherein $R^5$ and $R^6$ are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group, and may be bonded to each other to form a monocyclic or polycyclic group which may have a hetero atom, or may be united to form a divalent hydrocarbon group, and Y is a divalent hydrocarbon group of 1 to 10 carbon atoms (e.g., alkylene group represented by the formula $-(CH_2)_k-$ wherein k is an integer of 1 to 10) or a divalent aromatic ring.

Examples of the atom or the group and the polar group selected from the group consisting of the halogen atoms, the substituted or unsubstituted hydrocarbon groups of 1 to 30 carbon atoms which may have a linkage containing an oxygen atom, a nitrogen atom, a sulfur atom or a silicon atom, and the polar groups include the same atoms and groups as described for $R^1$ to $R^6$ in the formula (I).

The vinyl-based polymer (B) is preferably an aromatic vinyl-based polymer, and two or more kinds of vinyl-based monomers may be used at the same time. The vinyl-based polymer (B) can be obtained by any of the following preparation processes:

(1) a process comprising copolymerizing a vinyl-based monomer having an amide group (also referred to as the "specific vinyl-based monomer (a)" hereinafter) and another vinyl-based monomer (also referred to as the "vinyl-based monomer (b)" hereinafter), and

(2) a process comprising mixing a vinyl-based polymer (C) obtained from a polar group-containing monomer and an aromatic vinyl-based monomer with the compound represented by the following formula (V) (also referred to as the "specific amine compound" hereinafter).

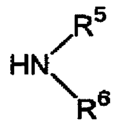

(V)

In the above formula, $R^5$ and $R^6$ have the same meanings as those of $R^5$ and $R^6$ in the formula (III) described in the aforesaid (1).

Of the above processes, the process (2) is preferably used because the raw materials are easily available and the process is simple.

Specific vinyl-based monomer (a)

Examples of the specific vinyl-based monomers (a) include:

acrylamide; methacrylamide;
N-alkyl(meth)acrylamides, such as N-methylacrylamide, N-methylmethacrylamide, N-ethylacrylamide, N-ethylmethacrylamide, N-isopropylacrylamide and N-isopropylmethacrylamide;
aromatic ring-containing (meth)acrylamides, such as N-benzylacrylamide, N-benzylmethacrylamide, N-phenylacrylamide, N-phenylmethacrylamide, N-(4-hydroxymethylphenyl)acrylamide, N-(4-hydroxymethylphenyl)methacrylamide, N-(2-hydroxymethylphenyl)acrylamide, N-(2-hydroxymethylphenyl)methacrylamide, N-(4-hydroxyphenyl)acrylamide, N-(4-hydroxyphenyl)methacrylamide, N-(3-hydroxyphenyl)acrylamide, N-(3-hydroxyphenyl)methacrylamide, N-(2-hydroxyphenyl)acrylamide, N-(2-hydroxyphenyl)methacrylamide, N-(2-methylphenyl)acrylamide, N-(2-methylphenyl)methacrylamide, N-(4-methylphenyl)acrylamide, N-(4-methylphenyl)methacrylamide, N-(2,4-dimethylphenyl)acrylamide, N-(2,4-dimethylphenyl)methacrylamide, N,N-diphenylacrylamide, N,N-diphenylacrylamide, N,N-di(4-hydroxyphenyl)acrylamide, N,N-di(4-hydroxyphenyl)phenylacrylamide, N,N-di(3-hydroxyphenyl)acrylamide and N,N-di(3-hydroxyphenyl)phenylacrylamide; and
N,N-dialkyl(meth)acrylamides, such as N,N-diisopropylacrylamide, N,N-diisopropylacrylamide, N,N-dimethylacrylamide, N,N-dimethylacrylamide, N,N-diethylacrylamide and N,N-diethylacrylamide.

Of these, acrylamides wherein one hydrogen atom is bonded to N that constitutes the amide group are preferable.

Vinyl-based monomer (b)

Examples of the vinyl-based monomers (b) include vinylcarboxylic acid monomers, such as acrylic acid, methacrylic acid and itaconic acid; vinyl cyanide monomers, such as acrylonitrile and methacrylonitrile; (meth)acrylate monomers, such as methyl (meth)acrylate, ethyl (meth)acrylate, benzyl (meth)acrylate, phenyl (meth)acrylate, 2-hydroxyethyl (meth)acrylate and 3-hydroxypropyl (meth)acrylate; maleimide monomers, such as N-phenylmaleimide; and aromatic vinyl-based monomers described below. Of these, vinylcarboxylic acid monomers are preferable from the viewpoint of improvement in compatibility.

Aromatic vinyl-based monomer (c)

Examples of the aromatic vinyl-based monomers include styrene; alkyl substituted styrenes, such as α-methylstyrene, β-methylstyrene and p-methylstyrene; halogen substituted styrenes, such as 4-chlorostyrene and 4-bromostyrene; hydroxystyrenes, such as p-hydroxystyrene, α-methyl-p-hydroxystyrene, 2-methyl-4-hydroxystyrene and 3,4-dihydroxystyrene; vinylbenzyl alcohols; alkoxy substituted styrenes, such as p-methoxystyrene, p-t-butoxystyrene and m-t-butoxystyrene; vinylbenzoic acids, such as 3-vinylbenzoic acid and 4-vinylbenzoic acid; vinylbenzoic esters, such as methyl 4-vinylbenzoate and ethyl 4-vinylbenzoate; 4-vinylbenzyl acetate; 4-acetoxystyrene; amidostyrenes, such as 2-butylamidostyrene, 4-methylamidostyrene and p-sulfonamidostyrene; aminostyrenes, such as 3-aminostyrene, 4-aminostyrene, 2-isopropenylaniline and vinylbenzyldimethylamine; nitrostyrenes, such as 3-nitrostyene and 4-nitrostyrene; cyanostyrenes, such as 3-cyanostyrene and 4-cyanostyrene; vinylphenylacetonitrile; and arylstyrenes, such as phenylstyrene. These monomers may be used in combination of two or more kinds as the copolymerization components. Of these, styrene and α-methylstyrene are preferable because they are industrially easily available and are inexpensive.

Radical polymerization initiator

When the vinyl-based polymer (B) for use in the invention is synthesized by radical polymerization, a publicly known organic peroxide that generates free radicals or an azobis type radical polymerization initiator is employable.
Examples of the organic peroxides include:
diacyl peroxides, such as diacetyl peroxide, dibenzoyl peroxide, diisobutyroyl peroxide, di(2,4-dichlorobenzoyl) peroxide, di(3,5,5-trimethylhexanoyl) peroxide, dioctanoyl peroxide, dilauroyl peroxide, distearoyl peroxide and bis{4-(m-toluoyl) benzoyl} peroxide;
ketone peroxides, such as methyl ethyl ketone peroxide, cyclohexanone peroxide, methylcyclohexanone peroxide and acetylacetone peroxide;
hydroperoxides, such as hydrogen peroxide, t-butyl hydroperoxide, α-cumene hydroperoxide, p-menthane hydroperoxide, diisopropylbenzene hydroperoxide, 1,1,3,3-tetramethylbutyl hydroperoxide and t-hexyl hydroperoxide;
dialkyl peroxides, such as di-t-butyl peroxide, dicumyl peroxide, dilauryl peroxide, α,α'-bis(t-butylperoxy)diisopropylbenzene, 2,5-dimethyl-2,5-bis(t-butylperoxy)hexane, t-butylcumyl peroxide and 2,5-dimethyl-2,5-bis(t-butylperoxy)-3-hexyne;
peroxy esters, such as t-butyl peroxyacetate, t-butyl peroxypivalate, t-hexyl peroxypivalate, 1,1,3,3-tetramethylbutyl peroxy-2-ethylhexanoate, 2,5-dimethyl-2,5-bis(2-ethylhexanoylperoxy)hexane, 1-cyclohexyl-1-methylethyl peroxy-2-ethylhexanoate, t-hexyl peroxy-2-ethylhexanoate, t-butyl peroxy-2-ethylhexanoate, t-butyl peroxyisobutyrate, t-butyl peroxymaleate, t-butyl peroxy-3,5,5-trimethylhexanoate, t-butyl peroxylaurate, 2,5-dimethyl-2,5-bis(m-toluoylperoxy)hexane, $\alpha,\alpha'$-bis(neodecanoylperoxy)diisopropylbenzene, cumyl peroxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneododecanoate, t-butyl peroxybenzoate, t-hexyl peroxybenzoate, bis(t-butylperoxy)isophthalate, 2,5-dimethyl-2,5-bis(benzoylperoxy)hexane, t-butyl peroxy-m-toluoylbenzoate and 3,3',4,4'-tetra(t-butylperoxycarbonyl)benzophenone;
peroxy ketals, such as 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)cyclohexane, 1,1-bis(t-butylperoxy)cyclododecane, 2,2-bis(t-butylperoxy)butane, n-butyl 4,4-bis(t-butylperoxy)pivalate and 2,2-bis(4,4-di-t-butylperoxycyclohexyl)propane;
peroxy monocarbonates, such as t-hexyl peroxyisopropyl monocarbonate, t-butyl peroxyisopropyl monocarbonate, t-butyl peroxy-2-ethylhexyl monocarbonate and t-butyl peroxyallyl monocarbonate;
peroxy dicarbonates, such as di-sec-butyl peroxydicarbonate, di-n-propyl peroxydicarbonate, diisopropyl peroxydicarbonate, bis(4-t-butylcyclohexyl) peroxydicarbonate, di-2-ethoxyethyl peroxydicarbonate, di-2-ethylhexyl peroxydicarbonate, di-2-methoxybutyl peroxydicarbonate and di(3-methyl-3-methoxybutyl) peroxydicarbonate; and
other compounds, such as t-butyltrimethylsilyl peroxide.
However, the organic peroxide employable in the invention is not limited to the above-exemplified compounds.

Examples of the azobis type radical polymerization initiators include azobisisobutyronitrile, azobisisovaleronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2,2'-azobis[2-methyl-N-{1,1-bis(hydroxymethyl)-2-hydroxyethyl}propionamide], 2,2'-azobis[2-methyl-N-{2-(1-hydroxybutyl)}propionamide], 2,2'-azobis[2-methyl-N-(2-hydroxyethyl)-propionamide], 2,2'-azobis[N-(2-propenyl)-2-methylpropionamide], 2,2'-azobis(N-butyl-2-methylpropionamide), 2,2'-azobis(N-cyclohexyl-2-methylpropionamide), 2,2'-azobis[2-(5-methyl-2-imidazolin-2-yl)propane]dihydrochloride, 2,2'-azobis[2-(2-imidazolin-2-yl)propane]dihydrochloride, 2,2'-azobis[2-(2-imidazolin-2-yl)propane]disulfate·dihydrate, 2,2'-azobis[2-(3,4,5,6-tetrahydropyrimidin-2-yl)propane]dihydrochloride, 2,2'-azobis[2-{1-(2-hydroxyethyl)-2-imidazolin-2-yl}propane]dihydrochloride, 2,2'-azobis[2-(2-imidazolin-2-yl)propane], 2,2'-azobis(2-methylpropionamidine)dihydrochloride, 2,2'-azobis[N-(2-carboxyethyl)-2-methyl-propionamidine], 2,2'-azobis(2-methylpropionamidoxime), dimethyl 2,2'-azobisbutyrate, 4,4'-azobis(4-cyanopentanoic acid) and 2,2'-azobis(2,4,4-trimethylpentane). However, the azobis type radical polymerization initiator employable in the invention is not limited to the above-exemplified compounds.

Catalyst

In the copolymerization reaction of the vinyl-based monomer, a catalyst may be used. This catalyst is not specifically restricted, and for example, publicly known anionic polymerization catalysts, coordination anionic polymerization catalysts and cationic polymerization catalysts are employable.

Vinyl-based polymer (B)

The vinyl-based polymer (B) for use in the invention is obtained by copolymerizing the vinyl-based monomer in the presence of the polymerization initiator and the catalyst through a heretofore known process, such as bulk polymerization, solution polymerization, precipitation polymerization, emulsion polymerization, suspension polymerization or bulk-suspension polymerization.

In the specific vinyl-based polymer of the vinyl-based polymers (B) obtained as above, the proportion of the structural units (II) is in the range of usually 0.5 to 90% by weight, preferably 0.5 to 60% by weight, more preferably 1 to 30% by weight, based on the total 100% by weight of all the structural units, and the proportion of the aromatic vinyl polymer structural units derived from the aromatic vinyl-based monomer (c) is in the range of usually 10 to 99.5% by weight, preferably 40 to 99.5% by weight, more preferably 70 to 99% by weight, based on the total 100% by weight of all the structural units. From the viewpoints of optical properties (control of wavelength dispersion and development of retardation) of an oriented retardation film formed from the resin composition obtained by blending the vinyl-based polymer with the cycloolefin-based polymer, compatibility in the blending of the vinyl-based polymer with the cycloolefin-based polymer, and heat resistance (glass transition temperature), the above proportions are preferable.

The vinyl-based polymer (B) has a number-average molecular weight (Mn) in terms of polystyrene, as measured by gel permeation chromatography (GPC), of usually 3,000 to 500,000, preferably 5,000 to 400,000, more preferably 10,000 to 250,000, and a weight-average molecular weight (Mw) of usually 500 to 1,000,000, preferably 5,000 to 800,000, more preferably 20,000 to 500,000. If the molecular weight is too low, the strength of the resulting film is sometimes

lowered. If the molecular weight is too high, the viscosity of the solution becomes too high, and hence, productivity or processability of the thermoplastic resin composition of the invention is sometimes deteriorated.

The vinyl-based polymer (B) has a molecular weight distribution (Mw/Mn) of usually 1.0 to 10, preferably 1.2 to 5, more preferably 1.2 to 4.

Vinyl-based polymer (C)

The vinyl-based polymer (C) is derived from the following polar group-containing monomer and the aforesaid aromatic vinyl-based monomer (the aforesaid aromatic vinyl-based monomer (c)).

Polar group-containing monomer

Examples of the polar group-containing monomers include acid anhydride monomers, such as maleic anhydride, citraconic anhydride, cis-1-cyclohexene-1,2-dicarboxylic anhydride, 3-methyl-cis-1-cyclohexene-1,2-dicarboxylic anhydride and 4-methyl-cis-1-cyclohexene-1,2-dicarboxylic anhydride; acid chloride monomers, such as acryloyl chloride and methacryloyl chloride; and acrylic or methacrylic monomers, such as acrylic acid, methacrylic acid, itaconic acid, carboxylic acid monomers, methyl acrylate, ethyl acrylate, methyl methacrylate and ethyl methacrylate.

As the vinyl-based polymer (C), a copolymer of the acid anhydride monomer and the aromatic vinyl-based monomer is particularly preferably used, and more specifically, a copolymer of the acid anhydride monomer and styrene is preferable from the viewpoints of compatibility, heat resistance, industrial availability and cost.

When the vinyl-based polymer (C) derived from the polar group-containing monomer and the aromatic vinyl-based monomer is synthesized by radical polymerization, a publicly known organic peroxide that generates free radicals or an azobis type radical polymerization initiator, which is used for the synthesis of the vinyl-based monomer (B), is employable. Further, a catalyst which is used for the synthesis of the vinyl-based monomer (B) may be used as the catalyst.

The vinyl-based polymer (C) for use in the invention is obtained by copolymerizing the vinyl-based monomer in the presence of the polymerization initiator and the catalyst through a heretofore known process, such as bulk polymerization, solution polymerization, precipitation polymerization, emulsion polymerization, suspension polymerization or bulk-suspension polymerization.

In the vinyl-based polymer (C) obtained as above, the proportion of the vinyl polymer structural units derived from the polar group-containing monomer is in the range of usually 0.5 to 50% by weight, preferably 0.5 to 30% by weight, more preferably 1 to 20% by weight, based on the total 100% by weight of all the structural units, and the total proportion of the aromatic vinyl polymer structural units derived from the aromatic vinyl-based monomer (c) is in the range of usually 50 to 99.5% by weight, preferably 70 to 99.5% by weight, more preferably 80 to 99% by weight, based on the total 100% by weight of all the structural units. If the addition effect of the amine-based additive (V) is out of the above range, the compatibilizing effect is markedly lowered, and there arises a possibility that a transparent film is not obtained.

The vinyl-based polymer (C) has a number-average molecular weight (Mn) in terms of polystyrene, as measured by gel permeation chromatography (GPC), of usually 3,000 to 500,000, preferably 5,000 to 400,000, more preferably 10,000 to 250,000, and a weight-average molecular weight (Mw) of usually 500 to 1,000,000, preferably 5,000 to 800,000, more preferably 20,000 to 500,000. If the molecular weight is too low, the strength of the resulting film is sometimes lowered. If the molecular weight is too high, The viscosity of the solution becomes too high, and hence, productivity or processability of the thermoplastic resin composition of the invention is sometimes deteriorated.

The vinyl-based polymer (C) has a molecular weight distribution (Mw/Mn) of usually 1.0 to 10, preferably 1.2 to 5, more preferably 1.2 to 4.

Specific amine compound

Examples of the compounds represented by the formula (V) include the following compounds:

primary aliphatic amines, such as methylamine, ethylamine, propylamine, isopropylamine, butylamine, hexylamine, cyclohexylamine, 2-hydroxyethylamine and benzylamine;

primary aromatic amines, such as aniline, 2-methylaniline, 4-methylaniline, 2,4-dimethylaniline, 2,6-dimethylaniline, 2-ethylaniline, 2,4-diethylaniline, 2,6-isopropylamine, 2-methoxyaniline, 4-methoxyaniline, 2-ethoxyaniline, 4-ethoxyaniline, 4-ethoxycarbonylaniline, 2-ethoxycarbonylaniline, 3,5-dimethoxyaniline, 4-hydroxyaniline, 3-hydroxyaniline, 2-hydroxyaniline, 4-hydroxymethylaniline, 2-hydroxymethylaniline, 3-hydroxymethylaniline, 4-aminobenzoic acid, 3-aminobenzoic acid, 2-aminobenzoic acid, 4-chloroaniline, 3-chloroaniline, 2-chloroaniline, 2-methyl-5-methoxyaniline, 2,4-dimethoxyaniline, 2,5-dimethoxyaniline, 2,4-diethoxyaniline, 2,5-diethoxyaniline, $\alpha$-naphthylamine, 5-ethoxycarbonyl-2-methylaniline, 3-ethoxycarbonyl-2-methylaniline, 4-ethoxycarbonyl-2-methylaniline, 5-ethoxycarbonyl-2-methoxyaniline, 3-ethoxycarbonyl-2-methoxyaniline, 4-ethoxycarbonyl-2-methoxyaniline, 5-ethoxycarbonyl-2-chloroaniline, 3-ethoxycarbonyl-2-chloroaniline, 4-ethoxycarbonyl-2-chloroaniline, 3-amino-4-methylbenzoic acid, 3-amino-4-methoxybenzoic acid, 3-amino-4-chlorobenzoic acid, 3-amino-2-methylbenzoic acid, 3-amino-2-methoxybenzoic acid, 3-amino-2-chlorobenzoic acid, 3-amino-4-hydroxybenzoic acid, 4-amino-3-methylbenzoic acid, 3,4-diaminobenzoic acid and 5-aminoisophthalic acid;
secondary aliphatic amines, such as dimethylamine, diethylamine, diisopropylamine, dicyclohexylamine, pyrrolidine, piperidine, 4-piperidinecarboxylic acid, morpholine and di(hydroxyethyl)amine; and
secondary aromatic amines, such as N-methylaniline, N-ethylaniline, N-propylaniline, 2-aminopyridine and diphenylamine.

Of these, primary amines are preferable and primary aromatic amines are particularly preferable as the amines used, from the viewpoint of compatibility with the cycloolefin-based polymer (A) and the vinyl-based polymer (C).
The amount of the amine added is in the range of usually 10% by mol to 200% by mol, preferably 20% by mol to 150% by mol, more preferably 30% by mol to 140% by mol, based on the structures derived from the polar group-containing monomer contained in the vinyl-based polymer (C). If the amount of the amine is out of the above range, the effect of improving compatibility between the cycloolefin (A) and the vinyl polymer (B) is insufficient, and production of the transparent film is difficult.

Thermoplastic resin composition and optical film

In the thermoplastic resin composition and the optical film of the invention, the vinyl-based polymer (B) is contained in an amount of usually 10 to 300 parts by weight, preferably 20 to 200 parts by weight, more preferably 40 to 100 parts by weight, based on 100 parts by weight of the cycloolefin-based polymer (A). When the amount of the vinyl-based polymer (B) is in the above range, the retardation film having positive wavelength dispersion properties can be obtained by subjecting the thermoplastic resin composition to film formation and then stretching the film. Further, the strength of the film is also enhanced. If the amount of the vinyl-based polymer (B) is less than the lower limit of the above range, an oriented film obtained from the thermoplastic resin composition does not exhibit positive wavelength dispersion properties occasionally. If the amount of the vinyl-based polymer (B) exceeds the upper limit of the above range, the heat resistance of the resulting thermoplastic resin composition or optical film is sometimes lowered, or the strength of the optical film is sometimes lowered.
The thermoplastic resin composition and the optical film of the invention may further contain a hydrocarbon resin. Examples of the hydrocarbon resins include $C_5$-based resins, $C_9$-based resins, $C_5$-based/$C_9$-based mixture resins, cyclopentadiene-based resins, olefin/vinyl substituted aromatic compound copolymer-based resins, cyclopentadiene compound/vinyl substituted aromatic compound copolymer-based resins, hydrogenation products of these resins, and hydrogenation products of vinyl substituted aromatic resins. The content of the hydrocarbon resin is in the range of usually 0.01 to 50 parts by weight, preferably 0.1 to 25 parts by weight, based on 100 parts by weight of the cycloolefin-based polymer (A).
To the thermoplastic resin composition, antioxidants, ultraviolet light absorbers, etc. described below may be added in order to improve heat deterioration resistance and light resistance.
Examples of the antioxidants include 2,6-di-t-butyl-4-methylphenol, 2,2'-dioxy-3,3'-di-t-butyl-5,5'-dimethyldiphenylmethane, tetrakis[methylene-3-(3,5-di-t-butyl-4-hydroxyphenyl)propionato]methane, 1,1,3-tris(2-methyl-4-hydroxy-5-t-butylphenyl)butane, 1,3,5-trimethyl-2,4,6-tris(3,5-di-t-butyl-4-hydroxybenzyl)benzene, stearyl-β-(3,5-di-t-butyl-4-hydroxyphenyl) propionate, 2,2'-dioxy-3,3'-di-t-butyl-5,5'-diethylphenylmethane, 3, 9-bis [1,1-dimethyl-2-(β-(3-t-butyl-4-hydroxy-5-methylphenyl)propionyloxy)ethyl], 2,4,8,10-tetraoxaspiro[5.5]undecane, tris(2,4-di-t-butylphenyl) phosphite, cyclic neopentanetetraylbis(2,4-di-t-butylphenyl) phosphite, cyclic neopentanetetraylbis(2,6-di-t-butyl-4-methylphenyl) phosphite and 2,2-methylenebis(4,6-di-t-butylphenyl)octyl phosphite.
Examples of the ultraviolet light absorbers include 2,4-dihydroxybenzophenone, 2-hydroxy-4-methoxybenzophenone, 2-(2H-benzotriazol-2-yl)-4,6-bis(1-methyl-1-phenylethyl)phenol, 2-(2H-benzotriazol-2-yl)-4,6-di-tert-pentylphenol, 2-benzotriazol-2-yl-4,6-di-tert-butylphenol and 2,2'-methylenebis[4-(1,1,3,3-tetramethylbutyl)-6-[(2H-benzotriazol-2-yl)phenol]].
The amount of these additives is in the range of usually 0.01 to 5 parts by weight, preferably 0.05 to 4 parts by weight, based on 100 parts by weight of the resin composition.
For the purpose of improving processability, additives such as lubricant can be further added.

Process for preparing thermoplastic resin composition

The thermoplastic resin composition of the invention can be prepared by, for example, the following processes:

(i) a process comprising mixing the cycloolefin-based polymer (A) with the vinyl-based polymer (B) and arbitrary

components by the use of a twin-screw extruder, a roll kneading machine or the like,
(ii) a process comprising adding the vinyl-based polymer (B) to a solution of the cycloolefin-based polymer (A) in an appropriate solvent and mixing them, and
(iii) a process comprising mixing the cycloolefin-based polymer (A) with the vinyl-based polymer (C) and the specific amine compound.
In the process (iii), the vinyl-based polymer (B) is formed by mixing the vinyl-based polymer (C) with the specific amine compound.

The blending ratio by weight between the cycloolefin-based polymer (A) and the vinyl-based polymer (C) is the same as the blending ratio by weight between the cycloolefin-based polymer (A) and the vinyl-based polymer (B).
The process (iii) for preparing the thermoplastic resin composition is more specifically carried out in the following manner:

the cycloolefin polymer (A) is dissolved in an appropriate solvent to prepare a solution (concentration: 5 to 50% by weight), then the compound represented by the formula (V) is added, then the vinyl copolymer (C) obtained from the polar group-containing monomer and the aromatic vinyl-based monomer is further added, and they were stirred for 3 to 24 hours to obtain the resin composition; or
the vinyl copolymer (C) obtained from the polar group-containing monomer and the aromatic vinyl-based monomer is dissolved in an appropriate solvent to prepare a solution (concentration: 5 to 50% by weight), then the compound represented by the formula (V) is added, they are stirred for 3 to 24 hours, then the cyloolefin-based polymer (A) is further added, and they are stirred for 3 to 12 hours to obtain the resin composition; or
the cycloolefin polymer (A) and the vinyl copolymer (C) obtained from the polar group-containing monomer and the aromatic vinyl-based monomer are dissolved in an appropriate solvent to prepare a solution (concentration: 5 to 50% by weight), then the compound represented by the formula (V) is added, and they are stirred for 3 to 24 hours to obtain the resin composition.

The way and the order of addition of the components have no influence on the resulting resin composition. By any of the above processes, the desired resin composition is obtained.
As the solvents used in the above processes, common solvents used for a solution casting method for producing optical films are employable. Taking solubility into account, methylene chloride is preferable.

<u>Process for producing optical film</u>

The optical film of the invention can be obtained by forming the thermoplastic resin composition into a film or a sheet by a melt molding method, a solution casting method (solvent casting method) or the like.
The solution casting method is, for example, a method comprising dissolving or dispersing the thermoplastic resin composition of the invention in an solvent to prepare a liquid of a proper concentration, then pouring or applying the liquid onto an appropriate carrier, drying the liquid layer and then peeling the resulting film from the carrier.
When the thermoplastic resin composition of the invention is dissolved or dispersed in a solvent, the concentration of the resin composition is adjusted to usually 1 to 90% by weight, preferably 5 to 50% by weight, more preferably 10 to 35% by weight. If the concentration of the resin is less than the lower limit of the above range, it becomes difficult to ensure the thickness of the film. Further, because of foaming that accompanies evaporation of the solvent, it becomes difficult to obtain the film of surface smoothness. On the other hand, if the concentration exceeds the upper limit of the above range, The viscosity of the solution becomes too high, and it becomes difficult to obtain the optical film of uniform thickness and uniform surface, so that such a concentration is undesirable.
The viscosity of the solution at room temperature is in the range of usually 1 to 1,000,000 (mPa·s), preferably 10 to 500,000 (mPa·s), more preferably 100 to 200,000 (mPa·s), particularly preferably 1,000 to 100,000 (mPa·s).
Examples of the solvents employable herein include hydrocarbon solvents, such as cyclohexane, cyclopentane and methylcyclohexane; aromatic solvents, such as benzene, toluene and xylene; cellosolve solvents, such as methyl cellosolve, ethyl cellosolve and 1-methoxy-2-propanol; ketone solvents, such as diacetone alcohol, acetone, cyclohexanone, methyl ethyl ketone, 4-methyl-2-pentanone and methyl isobutyl ketone; ester solvents, such as methyl lactate, methyl acetate, ethyl acetate and butyl acetate; halogen-containing solvents, such as methylene chloride and chloroform; ether solvents, such as tetrahydrofuran, dioxane, dimethoxyethane and 1,3-dioxolane; and alcohol solvents, such as 1-butanol and 1-pentanol.
Otherwise, by the use of a solvent which have the SP value (solubility parameter) of usually 10 to 30 ($MPa^{1/2}$), preferably 10 to 25 ($MPa^{1/2}$), more preferably 15 to 25 ($MPa^{1/2}$), particularly preferably 17 to 20 ($MPa^{1/2}$), the obtainable optical film has excellent surface uniformity and optical properties.
The above solvents can be used singly or in combination of two or more kinds. When two or more kinds of the solvents are used in combination, the SP value of the mixed solvent is desired to be in the above range. In this case, the SP

value of the mixed solvent can be determined from the weight ratio of the solvents. For example, if a mixture of two kinds of solvents is used and if the weight fractions of the solvents are represented by $W_1$ and $W_2$ and the SP values of the solvents are represented by $SP_1$ and $SP_2$, the SP value of the mixed solvent can be calculated from the following formula:

$$\text{SP value} = W_1 \cdot SP_1 + W_2 \cdot SP_2$$

In the preparation of the resin solution, the temperature for dissolving the thermoplastic resin composition of the invention in the solvent may be room temperature or higher than room temperature. By sufficient stirring, a homogeneous solution is obtained. If the film is colored when needed, a colorant such as a dye or a pigment can be properly added to the solution.
In order to improve surface smoothness of the optical film, a leveling agent may be added to the solution. As the leveling agent, various common leveling agents can be used. For example, fluorine-based nonionic surface-active agents, special acrylic resin-based leveling agents and silicone-based leveling agents are employable.
For producing the optical film of the invention by a solution casting method, the process comprising applying the above solution onto a carrier, e.g., a metal drum, a steel belt, a polyester film such as a film of polyethylene terephthalate (PET) or polyethylene naphthalate (PEN), or a polytetrafluoroethylene belt, by the use of a die or a coater, then drying/ removing the solvent and peeling the resulting film from the carrier is generally employable. Further, the optical film can be also produced by applying the resin composition solution onto a carrier by means of spraying, brushing, roll spin coating, dipping or the like, then drying/removing the solvent and peeling the resulting film from the carrier. By applying the solution repeatedly, film thickness or surface smoothness of the resulting film may be controlled.
In the case where a polyester film is used as a carrier, the polyester film may be a surface-treated film. As the method for the surface treatment, there can be mentioned a hydrophilic treatment method that is generally carried out, such as a method of superposing a layer of an acrylic resin or a sulfonate group-containing resin by coating or laminating or a method of increasing hydrophilicity of the film surface by corona discharge treatment or the like.
In the drying (solvent removal) step of the solution casting method, drying is not specifically restricted and can be carried out by a drying method generally used, such as a method of passing the carrier with the liquid layer through a drying oven by means of a large number of rollers. However, if bubbles are produced with evaporation of the solvent in the drying step, properties of the resulting film are markedly deteriorated. In order to avoid this, it is preferable to divide drying into plural (two or more) steps and to control the temperature or the air flow in each step.
The amount of a residual solvent in the optical film is usually not more than 10% by weight, preferably not more than 5% by weight, more preferably not more than 2% by weight, particularly preferably not more than 1% by weight. If the amount of the residual solvent in the film is more than 10% by weight, dimensional change of the optical film with time becomes large in the practical use of the optical film, so that such an amount is undesirable. Moreover, because of the residual solvent, Tg is lowered, and heat resistance is also lowered, so that such an amount is undesirable.
In order to carry out the later-described stretching favorably, the amount of the residual solvent sometimes needs to be properly controlled in the above range. More specifically, in order that the film may be allowed to stably and uniformly exhibit retardation by stretch orientation, the amount of the residual solvent is desired to be in the range of usually 10 to 0.1% by weight, preferably 5 to 0.1% by weight, more preferably 1 to 0.1% by weight. By allowing a slight amount of the solvent to remain in the film, stretch orientation sometimes becomes easy, or control of retardation sometimes becomes easy.
The optical film of the invention has a thickness of usually 0.1 to 3,000 μm, preferably 0.1 to 1,000 μm, more preferably 1 to 500 μm, most preferably 5 to 300 μm. In the case of the thickness of less than 0.1 μm, handling of the film becomes substantially difficult. In the case of the thickness of more than 3,000 μm, it sometimes becomes difficult to wind up the film into a roll.
The thickness distribution of the optical film of the invention is in the range of usually ±20%, preferably ±10%, more preferably ±5%, particularly preferably ±3%, based on the mean value. The variation of the thickness based on 1 cm is usually not more than 10%, preferably not more than 5%, more preferably not more than 1%, particularly preferably not more than 0.5%. By controlling the thickness in the above manner, the obtainable optical film is uniform, and when the film is stretch-oriented, occurrence of retardation unevenness of a transmitted light can be prevented.
As the extrusion method, a method comprising melting the resin by an extruder, feeding a given amount of the molten resin by a gear pump, filtering the molten resin through a metal filter to remove impurities, forming the resin into a film by a die, cooling the film using a take-off machine and taking up the film using a take-up machine is generally used. As the extruder used for the extrusion, any of extruders such as single-screw extruder, twin-screw extruder, planetary extruder, co-kneader and Banbury mixer type is employable, but preferably used is a single-screw extruder. Examples of shapes of screws of the extruders include vent type, Dalmage head type, double-flighted type and full-flighted type. Although a slow compression type extruder or a rapid compression type extruder is mentioned as a compression type

extruder, preferable is a full-flighted slow compression type extruder.

With regard to the gear pump used for metering, there are a gear pump of internal lubrication system wherein a resin returned from the downstream side between gears enters the system and a gear pump of external lubrication system wherein the resin is discharged outside. In the case of the thermoplastic cycloolefin-based polymer having unfavorable heat stability, the external lubrication system is preferable. With regard to gear cutting of the gear pump, a helical type is preferable to a parallel type to the axis, from the viewpoint of stabilization of metering.

Examples of the filters used for filtering out foreign matters include a leaf disc filter, a candle filter, a leaf filter and a screen mesh, and preferable is a leaf disc filter having a relatively small distribution of residence time and capable of enlarging the filtration area. Examples of filter elements include those of metal fiber sintered type, metal powder sintered type and metal fiber/powder laminate type.

As the shape of a center pole of the filter, there can be mentioned external flow type, hexagonal prism internal flow type, circular cylinder internal flow type or the like. It is possible to select any of them provided that the residence zone is small, but preferable is the external flow type.

The molten thermoplastic olefin-based resin is discharged from the die and contact-solidified on a cooling drum to form a desired film. With regard to the die shape, it is essential to make the resin flow inside the die uniform, and in order to maintain uniformity of the film thickness, it is essential that the pressure distribution inside the die at the vicinity of the die exit should be constant in the width direction. Further, in order to obtain uniformity of the film thickness, it is essential that the flow rate of the resin in the width direction should be almost constant and the flow rate at the die exit should be constant within the range in which fine adjustment of the flow rate can be made by the lip opening. In order to satisfy the above conditions, the shape of the manifold is preferably a coat hanger type.

A straight manifold, a fish tail type manifold or the like is undesirable because a flow rate distribution in the width direction is liable to occur.

In order to make the film thickness distribution uniform, it is important to make the temperature distribution at the die exit constant in the width direction, and the temperature distribution is in the range of preferably ±1°C, more preferably ±0.5°C. If the temperature distribution is out of the range of ±1°C and temperature unevenness is brought about in the width direction, a difference in melt viscosity of the resin occurs, and hence, thickness unevenness and stress distribution unevenness occur. Consequently, when the stretching operation is carried out, retardation unevenness is liable to occur, so that such a temperature distribution is undesirable.

The lip opening (referred to as "lip gap" hereinafter) at the die exit is in the range of usually 0.05 to 1 mm, preferably 0.3 to 0.8 mm, more preferably 0.35 to 7 mm. If the lip gap is less than 0.05 mm, the resin pressure inside the die becomes too high, and leakage of the resin from other places than the die lip is liable to occur, so that such a lip gap is undesirable. On the other hand, if the lip gap exceeds 1 mm, the resin pressure in the die hardly rises, and hence, uniformity of the thickness in the width direction of the film is deteriorated, so that such a lip gap is undesirable.

Examples of methods for contact-solidifying the film extruded from the die include a nip roll method, a static electricity application method, an air knife method, a vacuum chamber method and a calender method. The appropriate method is selected according to the thickness and the use application of the film.

The surface of the cooling roll to solidify the film extruded from the die is also preferably subjected to various surface treatments similarly to the inner surfaces of the extrusion cylinder and the die.

Examples of materials of the extruder (cylinder, screw, etc.) and the die include steel of SCM type and stainless steel materials such as SUS. However, the materials used for them are not limited to these materials. As the inner surfaces of the extruder cylinder and the die and the surface of the extruder screw, those having been subjected to plating of chromium, nickel, titanium or the like, those having been coated with films of TiN, TiAlN, TiCN, CrN, DLC (diamond-like carbon) and the like by PVD (physical vapor deposition) method, those having been subjected to flame spraying with tungsten substances such as WC or ceramics such as cermet, or those having been subjected to nitriding treatment are preferably used. These surface treatments are preferable from the viewpoint that the coefficient of friction with the resin is low and the obtainable molten resin is uniform.

The resin temperature (extruder cylinder temperature) for producing the melt-extruded film of the invention is in the range of usually 200 to 350°C, preferably 220 to 320°C. If the resin temperature is lower than 200°C, the resin composition cannot be melted uniformly. On the other hand, if the resin temperature exceeds 350°C, the resin composition is thermally deteriorated when the composition is melted. Therefore, it becomes difficult to produce a high-quality film having excellent surface properties. The resin temperature is particularly preferably a temperature that is in the above temperature range and in the range of Tg+120°C to Tg+160°C (Tg: glass transition temperature of the resin composition). For example, when Tg of the resin composition is 130°C, the resin temperature particularly preferably used for the film production is in the range of 250 to 290°C.

The shear rate in the melt extrusion is in the range of usually 1 to 500 (l/sec), preferably 2 to 350 (l/sec), more preferably 5 to 200 (l/sec). If the shear rate in the extrusion is less than 1 (l/sec), the resin composition cannot be melted uniformly, and hence, an extruded film having small unevenness in thickness cannot be obtained. On the other hand, if the shear rate exceeds 500 (1/sec), the shear force is too large, and therefore, the resin and the additives are sometimes

decomposed or deteriorated to bring about defects, such as foaming, die line and deposits, on the surface of the extruded film.

The thickness of the melt-extruded film of the invention is in the range of usually 10 to 800 μm, preferably 20 to 500 μm, more preferably 40 to 500 μm.

If the thickness of the film is less than 10 μm, there sometimes arises difficulty in the post treatment such as stretching because of shortage of mechanical strength or the like. On the other hand, if the thickness of the film exceeds 800 μm, it is difficult to produce the film of uniform thickness and uniform surface properties, and besides, it sometimes becomes difficult to wind up the resulting film.

The thickness distribution of the raw material film of the invention is in the range of usually ±50, preferably ±3%, more preferably ±1%, based on the mean value. If the thickness distribution is out of the range of ±5%, retardation unevenness is liable to occur when the film is stretched to obtain the retardation film.

Optical film that gives retardation to transmitted light

The optical film of the invention is also preferably the optical film that gives retardation to a transmitted light (referred to as the "retardation film" hereinafter). The retardation film of the invention can be obtained by further stretching the optical film of the invention obtained by the above process. More specifically, the retardation film can be produced by publicly known monoaxial stretching method, biaxial stretching method or Z-axis stretching method. That is to say, there can be used crosswise monoaxial stretching by tentering, compression stretching between rolls, lengthwise monoaxial stretching using rolls having different circumferences, biaxial stretching combining crosswise monoaxial stretching with lengthwise monoaxial stretching, stretching by inflation, or the like.

In the case of the monoaxial stretching method, the stretching rate is in the range of usually 1 to 5,000%/min, preferably 50 to 1,000%/min, more preferably 100 to 1,000%/min.

In the case of the biaxial stretching method, there are a case where stretching is carried out in two directions at the same time and a case where after monoaxial stretching, stretching in a direction different from the initial stretching direction is carried out. In these cases, the intersecting angle between the two stretching axes to control the shape of an index ellipsoid is not specifically restricted because it is determined according to the desired properties, but it is usually in the range of 120 to 60 degrees. The stretching rates in the stretching directions may be the same or different and are each in the range of usually 1 to 5,000%/min, preferably 50 to 1,000%/min, more preferably 100 to 1,000%/min, particularly preferably 100 to 500%/min.

The stretching temperature is not specifically restricted. However, on the basis of the glass transition temperature Tg of the cycloolefin-based polymer (A), the stretching temperature is in the range of usually Tg±30°C, preferably Tg±15°C, more preferably Tg-5°C to Tg+15°C. By controlling the stretching temperature in the above range, occurrence of retardation unevenness can be inhibited.

Although the stretch ratio is not specifically restricted because it is determined according to the desired properties, it is in the range of usually 1.01 to 10 times, preferably 1.03 to 5 times, more preferably 1.03 to 3 times. If the stretch ratio is more than 10 times, control of retardation sometimes becomes difficult.

The film having been stretched may be cooled as it is, but it is desirable to hold the film at a temperature of Tg-20°C to Tg for at least 10 seconds, preferably 30 seconds to 60 minutes, more preferably 1 minute to 60 minutes, to perform heat setting, whereby the obtainable stable retardation film suffers small change of retardation of a transmitted light with time.

In the case where the optical film of the invention which has not been subjected to stretching is heated at 100°C for 500 hours, the dimensional shrinkage of the film due to heating is usually not more than 5%, preferably not more than 3%, more preferably not more than 1%, particularly preferably not more than 0.5%.

In the case where the retardation film of the invention is heated at 100°C for 500 hours, the dimensional shrinkage of the film due to heating is usually not more than 10%, preferably not more than 5%, more preferably not more than 3%, particularly preferably not more than 1%.

In order to limit the dimensional shrinkage to the above range, control of the conditions of the casting method or the stretching method is also an effective means in addition to the selection of the specific monomer or the selection of other copolymerizable monomers in the invention.

In the retardation film obtained as above, molecules are oriented by stretching, and thereby, retardation is given to a transmitted light. This retardation can be controlled by stretch ratio, stretching temperature, film thickness or the like. For example, in the case where films have the same thickness as each other before stretching, the film having a higher stretch ratio tends to provide a larger absolute value of retardation of a transmitted light. Therefore, by changing the stretch ratio, the obtainable retardation film gives desired retardation to a transmitted light.

On the other hand, in the case where films have the same stretch ratio as each other, the film having a larger thickness before stretching tends to provide a larger absolute value of retardation of a transmitted light. Therefore, by changing the film thickness before stretching, the obtainable retardation film gives desired retardation to a transmitted light. In the

aforesaid stretching temperature range, the absolute value of retardation of a transmitted light tends to become larger as the stretching temperature is lowered. Therefore, by changing the stretching temperature, the obtainable retardation film gives desired retardation to a transmitted light.

The value of retardation given to a transmitted light by the retardation film obtained by stretching as above is determined according to the use application of the film and is not specifically restricted. When the retardation film is used for a liquid crystal display device, an electroluminescence display device or a wave plate of laser optical system, the retardation value is in the range of usually 1 to 10,000 nm, preferably 10 to 2,000 nm, more preferably 15 to 1,000 nm.

The retardation of a light transmitted by the film is desired to be highly uniform, and specifically, the dispersion of retardation at a wavelength of 550 nm is in the range of usually ±20%, preferably ±10%, more preferably ±5%. That is to say, the retardation at a wavelength of 550 nm is in the range of usually ±20%, preferably ±10%, more preferably ±5%, based on the mean value. If the dispersion of retardation is out of the range of ±20%, a liquid crystal device using the film suffers color unevenness, and the performance of the display main body is sometimes deteriorated.

Further, the ratio of the retardation Re(400) at a wavelength of 400 nm to the retardation Re(550) at a wavelength of 550 nm, Re(400)/Re(550), is desired to be in the range of 1.0 to 0.1, preferably 0.9 to 0.3, more preferably 0.9 to 0.5, and the ratio of the retardation Re(800) at a wavelength of 800 nm to the retardation Re(550) at a wavelength of 550 nm, Re(800)/Re(550), is desired to be in the range of 1.5 to 1.0, preferably 1.5 to 1.1, more preferably 1.4 to 1.2. When a retardation at a certain wavelength $\lambda$ is represented by Re($\lambda$), the retardation film satisfying the above conditions can make the value of Re($\lambda$)/$\lambda$ almost constant in the whole wavelength region of 400 to 800 nm.

By controlling the value of Re($\lambda$)/$\lambda$ in the range of ±30%, preferably ±20%, more preferably ±10%, based on the mean value, in the whole wavelength region of 400 to 800 nm, the obtainable $\lambda$ plate of a wide band exhibits a retardation of 1/4$\lambda$ or 1/2$\lambda$ in the whole wavelength region of 400 to 800 nm. That is to say, in the case where the value of Re($\lambda$)/$\lambda$ is 0.15 to 0.40, preferably 0.16 to 0.35, more preferably 0.16 to 0.30, in the whole wavelength region of 400 to 800 nm, the film has a function of a 1/4$\lambda$ plate that converts a circularly polarized light and a linearly polarized light to each other in the whole wavelength region of 400 to 800 nm, and in the case where the value of Re($\lambda$)/$\lambda$ is 0.35 to 0.65, preferably 0.45 to 0.60, more preferably 0.45 to 0.55, the film has a function of a 1/2$\lambda$ plate that rotates a plane of polarization of a linearly polarized light by 90 degrees in the whole wavelength region of 400 to 800 nm, so that the film is extremely useful.

The retardation film of the invention can be used as a retardation film or a retardation plate by using it alone or by laminating it on a transparent substrate. Further, the retardation film or the retardation plate can be also used by laminating it on another film, sheet or substrate. For laminating the retardation film or the retardation plate, an adhesive or a bonding material is employable. As the adhesive or the bonding material, one having excellent transparency is preferably used. Examples of such adhesives or bonding materials include natural rubbers, synthetic rubbers, a vinyl acetate/vinyl chloride copolymer, polyvinyl ether, acrylic resins and modified polyolefin-based resins; curing type adhesives obtained by adding, to these resins, a curing agent such as isocyanate; bonding materials for dry laminating obtained by mixing polyurethane-based resin solutions with polyisocyanate-based resin solutions; synthetic rubber-based bonding materials; and epoxy-based bonding materials.

In order to enhance workability in laminating the film on another film, sheet or substrate, an adhesive layer or a bonding material layer may be laminated in advance on the retardation film or the retardation plate. In the case where the adhesive layer or the bonding material layer is laminated, the aforesaid adhesive or bonding material is employable as the adhesive or the bonding material.

Optical film having transparent conductive layer

The optical film of the invention is also preferably an optical film having a transparent conductive layer, which is obtained by laminating a transparent conductive layer on at least one surface of the film. Examples of materials commonly used for forming the transparent conductive layer include metals, such as Sn, In, Ti, Pb, Au, Pt and Ag, and their oxides. When a layer of a simple metal is formed on the substrate, the metal layer can be oxidized later, when needed. Although the transparent conductive layer may be formed by deposition of an oxide layer from the first, it may be also formed in such a manner that a film of a simple metal or a lower oxide is formed first and then subjected to oxidation treatment, such as thermal oxidation, anodic oxidation or liquid phase oxidation, to make the layer transparent. The transparent conductive layer is formed on the optical film of the invention by bonding another sheet or film having a transparent conductive layer or directly formed on the optical film by plasma polymerization, sputtering, vacuum deposition, plating, ion plating, spraying, electrodeposition or the like. Although the thickness of the transparent conductive layer is determined according to the desired properties and is not specifically restricted, it is in the range of usually 10 to 10,000 angstroms, preferably 50 to 5,000 angstroms.

When the transparent conductive layer is directly formed on the optical film of the invention, an adhesive layer and an anchor coat layer may be formed between the optical film and the transparent conductive layer, when needed. Examples of the adhesive layers include layers of heat-resistant resins, such as epoxy resin, polyimide, polybutadiene,

phenolic resin and polyether ether ketone. As the anchor coat layer, a layer containing, as a component, a so-called acrylic prepolymer, such as epoxy diacrylate, urethane diacrylate or polyester diacrylate, is used. Curing can be carried out by a publicly known method, and for example, UV curing or thermal curing is used.

The optical film of the invention having the transparent conductive layer can be combined with a polarizing film to form the laminate. A combination of the optical film of the invention having the transparent conductive layer and the polarizing film is not specifically restricted, and on at least one surface of a polarizing film obtained by providing protective films on both surfaces of a polarizing membrane, the optical film of the invention having the transparent conductive film may be laminated through an appropriate adhesive or bonding material in such a manner that the opposite side surface to the transparent conductive layer side faces the adhesive or the bonding material. Otherwise, instead of the protective film on the polarizing membrane, the optical film of the invention having the transparent conductive layer may be used, that is, on the polarizing membrane, the optical film may be laminated through an appropriate adhesive or bonding material in such a manner that the opposite side surface to the transparent conductive layer side faces the adhesive or the bonding material. As a matter of course, it is possible to use the optical film of the invention having no transparent conductive layer as a protective film of the polarizing film. In this case, if the aforesaid retardation film of the invention is used as the protective film, there is an advantage that a retardation film does not need to be newly laminated on the polarizing film because the protective film functions as a retardation film.

For the purpose of lessening permeation of oxygen or water vapors, a layer of a gas barrier material such as polyvinylidene chloride or polyvinyl alcohol may be laminated on at least one surface of the optical film of the invention having the transparent conductive layer, when needed. Further, for the purpose of improving mar resistance and heat resistance of the film, a hard coat layer may be laminated on the gas barrier layer. Examples of the hard coating materials employable herein include organic hard coating materials, such as organosilicon-based resin, melamine resin, epoxy resin and acrylic resin; and inorganic hard coating materials, such as silicon dioxide. Of these, hard coating materials, such as organosilicon-based resin and acrylic resin, are preferable. As the organosilicon-based resins, those having various functional groups are used, and preferable is the resin having an epoxy group.

Optical film having antireflection layer

The optical film of the invention is also preferably an optical film having an antireflection layer. That is to say, on at least one surface of the optical film of the invention, an antireflection layer can be laminated. The antireflection layer is formed by, for example, coating the optical film with a solution of a composition containing a fluorine-based copolymer using a bar coater, a gravure coater or the like. The thickness of the antireflection layer is in the range of usually 0.01 to 50 μm, preferably 0.1 to 30 μm, more preferably 0.5 to 20 μm. If the thickness is less than 0.01 μm, the antireflection effect cannot be exerted. If the thickness exceeds 50 μm, thickness unevenness of the coating film is liable to occur, and appearance of the film is sometimes deteriorated, so that such a thickness is undesirable.

On the optical film of the invention having the antireflection layer, a hard coat layer or a stain-proofing layer publicly known may be laminated. Further, the aforesaid transparent conductive layer may be laminated. Furthermore, the optical film of the invention having the antireflection layer may have a function of giving retardation to a transmitted light or may have a light diffusion function.

By allowing the optical film of the invention having the antireflection layer to have plural functions as above, the antireflection film serves as some of a retardation film, a light diffusion film, a protective film of a polarizing plate and an electrode substrate (transparent conductive layer) when the optical film is used for, for example, a liquid crystal display device, so that the number of the parts can be decreased than before.

Uses of optical film

The optical film of the invention can be used for various liquid crystal display devices, such as cell phones, digital information terminals, pocket bells, navigation systems, on-vehicle liquid crystal displays, liquid crystal monitors, dimmer panels, displays for OA machines and displays for AV machines, electroluminescence display devices, touch panels, etc. Moreover, the optical film of the invention is useful as a wave plate used for recording/reproducing apparatuses for optical discs, such as CD, CD-R, MD, MO and DVD.

EXAMPLES

The present invention is further described with reference to the following examples, but it should be construed that the invention is in no way limited to those examples. In the following examples and comparative examples, the terms "part(s)" and "%" mean "part(s) by weight" and "% by weight", respectively, unless otherwise noted. In the following examples and comparative examples, various measurements and evaluation were carried out in the following manner.

Measurements of weight-average molecular weight and molecular weight distribution (Mw, Mw/Mn)

Using a gel permeation chromatograph (GPC, manufactured by Tosoh Corporation, trade name: HLC-8020; 4 columns: manufactured by Tosoh Corporation, trade name: TSK gel G7000HxL, TSK gel GMHxL, TSK gel GMHxL, TSK gel G2000xL) and using tetrahydrofuran (THF) as a solvent, the weight-average molecular weight (Mw) and molecular weight distribution (Mw/Mn), in terms of polystyrene, were measured. The Mn means the number-average molecular weight.

Confirmation of polymer molecular structure

Using a superconductive nuclear magnetic resonance absorption apparatus (NMR, manufactured by Bruker, trade name: AVANCE 500), $^1$H-NMR was measured in deutero chloroform. Further, using an infrared spectrophotometer (IR, manufactured by JASCO Corporation, trade name:

FT/IR-420), the infrared absorption (IR) spectrum was measured.

Glass transition temperature (Tg)

Using a differential scanning calorimeter (DSC) manufactured by Seiko Instruments Inc., the glass transition temperature was measured under the conditions of a nitrogen atmosphere and a heating rate of 20°C/min.

Amount of residual solvent

The sample was dissolved in methylene chloride, and the resulting solution was analyzed by the use of a GC-7A gas chromatography apparatus manufactured by Shimadzu Corporation.

Total light transmittance, haze

Using a haze meter HGM-2DP model manufactured by Suga Test Instrument Co., Ltd., the total light transmittance and haze were measured.

Retardation of transmitted light

Using KOBRA-21ADH and KOBRA-CCD manufactured by Oji Scientific Instruments, retardation of the transmitted light was measured.

Polymer Synthesis Example 1

In 8.02 g of methylene chloride, a styrene/maleic anhydride copolymer (Dylark D232, 0.699 g) was dissolved, then 0.0438 g of aniline was added, and they were stirred at room temperature for 1 hour. The reaction solution was introduced into methanol to perform solidification and precipitation to give the resin (P1). The resulting IR spectrum and $^1$H-NMR spectrum are shown in Figs. 1 and 2.

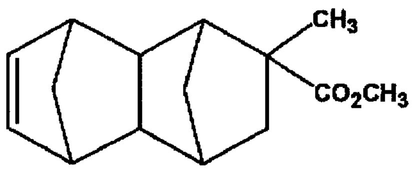

(I m)

Polymer Synthesis Example 2

In a reaction vessel purged with nitrogen, 50 g of 8-methoxycarbonyl-8-methyltetracyclo[4.4.0.1$^{2,5}$.1$^{7,10}$]-3-dodecene represented by the above formula (Im), 2.3 g of 1-hexene as a molecular weight modifier and 100 g of toluene were placed, and they were heated to 80°C. Then, 0.09 ml of a toluene solution of triethylaluminum (0.6 mol/l) and 0.29

ml of a toluene solution of methanol-modified $WCl_6$ (0.025 mol/l) were added, and reaction was performed at 80°C for 3 hours to give the polymer. Subsequently, the resulting ring-opened copolymer solution was placed in an autoclave, and 100 g of toluene was further added. Then, RuHCl (CO) $[P(C_6H_5)]_3$ as a hydrogenation catalyst was added in an amount of 2500 ppm based on the amount of the monomers charged, and the hydrogen gas pressure was adjusted to 9 to 10 MPa, followed by reaction at 160 to 165°C for 3 hours. After the reaction was completed, the reaction product was precipitated in a large amount of a methanol solution to give the hydrogenation product. The resulting hydrogenation product (resin (P2)) of the ring-opened polymer had a glass transition temperature (Tg) of 167°C, a weight-average molecular weight (Mw) of $13.5\times10^4$ and a molecular weight distribution (Mw/Mn) of 3.06.

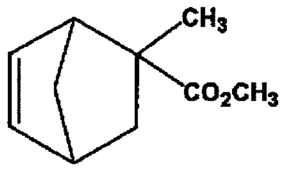

(IIm)

Polymer Synthesis Example 3

In a reaction vessel purged with nitrogen, 20 g of 8-methoxycarbonyl-8-methyltetracyclo[4.4.0.$1^{2,5}$.$1^{7,10}$]-3-dodecene shown in Polymer Synthesis Example 2, 5.0 g of 5-methoxycarbonyl-5-methylbicyclo[2.2.1]hept-2-ene represented by the above formula (IIm), 1.2 g of 1-hexene as a molecular weight modifier and 86.3 ml of toluene were placed, and they were heated to 80°C. Then, 0.15 ml of a toluene solution of triethylaluminum (0.61 mol/l) and 0.47 ml of a toluene solution of methanol-modified $WCl_6$ (0.025 mol/l) were added, and reaction was performed at 80°C for 3 hours to give the polymer. Subsequently, the resulting ring-opened copolymer solution was placed in an autoclave, and 86.3 ml of toluene was further added. Then, RuHCl (CO) $[P(C_6H_5)]_3$ as a hydrogenation catalyst was added in an amount of 2500 ppm based on the amount of the monomers charged, and the hydrogen gas pressure was adjusted to 9 to 10 MPa, followed by reaction at 160 to 165°C for 3 hours. After the reaction was completed, the reaction product was precipitated in a large amount of a methanol solution to give the hydrogenation product. The resulting hydrogenation product (resin (P3)) of the ring-opened polymer had a glass transition temperature (Tg) of 147°C, a weight-average molecular weight (Mw) of $11.5\times10^4$ and a molecular weight distribution (Mw/Mn) of 3.21.
The resulting $^1$H-NMR spectrum and IR spectrum of the resin (P3) are shown in Figs. 3 and 4.

Example 1

In methylene chloride, 35 parts by weight of the resin (P1) obtained in Polymer Synthesis Example 1 and 65 parts by weight of the resin (P2) obtained in Polymer Synthesis Example 2 were dissolved to prepare a solution having a solids concentration of 20% by weight. The solution was subjected to solution casting to give the transparent cast film (PF1), which had a thickness of 63 μm, a solvent residue of not more than 0.2% and a glass transition temperature of a single peak and in which the polymers had been compatibilized with each other.

Example 2

In 8.07 g of methylene chloride, a styrene/maleic anhydride copolymer (Dylark D232, 0.70 g) was dissolved. Thereafter, 0.044 g of aniline was added, and 1.30 g of the resin (P2) obtained in Polymer Synthesis Example 2 was further added, followed by stirring at room temperature for 6 hours. The resulting solution was subjected to casting to give the transparent cast film (PF2), which had a solvent residue of not more than 0.2%, a thickness of 250 μm and a glass transition temperature of a single peak and in which the polymers had been compatibilized with each other.

Example 3

In 8.02 g of methylene chloride, a styrene/maleic anhydride copolymer (Dylark D232, 0.699 g) was dissolved. Thereafter, 0.042 g of m-hydroxyaniline was added, and 1.30 g of the resin (P2) obtained in Polymer Synthesis Example 2 was further added, followed by stirring at room temperature for 6 hours. The resulting solution was subjected to casting to give the transparent cast film (PF3), which had a thickness of 214 μm, a solvent residue of not more than 0.2% and a glass transition temperature of a single peak and in which the polymers had been compatibilized with each other.

Example 4

In 8.07 g of methylene chloride, a styrene/maleic anhydride copolymer (Dylark D232, 0.70 g) was dissolved. Thereafter, 0.1 g of m-hydroxyaniline was added, and 1.30 g of the resin (P2) obtained in Polymer Synthesis Example 2 was further added, followed by stirring at room temperature for 6 hours. The resulting solution was subjected to casting to give the transparent cast film (PF4), which had a solvent residue of not more than 0.2%, a thickness of 215 μm and a glass transition temperature of a single peak and in which the polymers had been compatibilized with each other.

Example 5

In 8.07 g of methylene chloride, a styrene/maleic anhydride copolymer (Dylark D232, 0.64 g) was dissolved. Thereafter, 0.064 g of aniline was added, and 1.20 g of the resin (P3) obtained in Polymer Synthesis Example 3 was further added, followed by stirring at room temperature for 6 hours. The resulting solution was subjected to casting to give the transparent cast film (PF5), which had a thickness of 102 μm, a solvent residue of not more than 0.2% and a glass transition temperature of a single peak and in which the polymers had been compatibilized with each other.

Comparative Example 1

In 8.07 g of methylene chloride, a styrene/maleic anhydride copolymer (Dylark D232, 0.70 g) was dissolved. Thereafter, 1.30 g of the resin (P2) obtained in Polymer Synthesis Example 2 was added, followed by stirring at room temperature for 6 hours.
The resulting solution was subjected to casting to give the opaque cast film (PF6), which had a thickness of 200 μm, a solvent residue of not more than 0.2% and glass transition temperatures of two peaks and in which phase separation had occurred.

Production of retardation film

In a constant-temperature bath, the films obtained in Examples 1 to 5 were heated to Tg10°C, then stretched in a stretch ratio of twice at a stretching rate of 220%/min, then cooled and taken out to give the retardation films (PR1, PR2, PR3, PR4 and PR5).
Mw, Mw/Mn and glass transition temperature of the resins synthesized in Polymer Synthesis Examples 1 to 3 are set forth in Table 1, and film thickness, total light transmittance and haze of the resin films (PF1 to PF6) and the retardation films (PR1 to PR5) and retardation of a light transmitted by these films are set forth in Tables 2 and 3.
It can be seen from Table 2 that in the solution cast films obtained from a blend of an amide group-containing vinyl copolymer and a cycloolefin polymer hydrogenation product and using methylene chloride, the polymers were completely compatibilized, and the films could be markedly improved in transparency as compared the comparative example. Further, it was confirmed that also in the case where amines were added to form amide groups in the system, the resulting films exhibited compatibility similarly to the above and were improved in transparency.
With regard to the retardation films (PR1), (PR3) and (PR5) obtained in Examples 1, 3 and 5, the results obtained by measurements of wavelength dependence (Re(λ)/Re(550) of retardation of a transmitted light on the basis of a wavelength of 550 nm are shown in Fig. 5. It can be seen that these films exhibited specific optical properties that the inclination of the wavelength dispersion was positive.
Further, a polarizing plate and a retardation film attached onto a front face of a liquid crystal panel on the observer's side of a liquid crystal TV apparatus (LC-13B1-S, manufactured by Sharp Corporation) adopting an ASV system low-reflection black TFT liquid crystal were peeled off. The polarizing plate thus peeled and an oriented film having the same wavelength dependence of retardation as that of the retardation film (PR1) obtained in Example 1 and having Re(550) of 137nm±5nm were attached in such a manner that the oriented film was on the side of the liquid crystal cell and the transmission axis of the polarizing plate newly attached was the same as the transmission axis of the polarizing plate originally attached.
It could be confirmed that the liquid crystal TV apparatus having the retardation film (PR1) was excellent in coloring and contrast in the black display as viewed from an azimuth angle of 45 degrees and a pole angle of 60 degrees and that the visibility was excellent.
Table 1

| | Synthesis Ex. 1 | Synthesis Ex. 2 | Synthesis Ex. 3 |
|---|---|---|---|
| Resin | P1 | P2 | P3 |
| Mw (Mw/Mn) | 243500 (2.11) | 134900 (3.06) | 115000 (3.21) |
| Glass transition temperature (°C) | 113 | 170 | 147 |

Table 2 (Blend cast films formed in methylene chloride solvent using various polymers)

| | Ex. 1 | Ex. 2 | Ex. 3 | Ex. 4 | Ex. 5 | Comp. Ex. 1 |
|---|---|---|---|---|---|---|
| Type of film | PF1 | PF2 | PF3 | PF4 | PF5 | PF6 |
| Total light transmittance (%) | 92.9 | 92.7 | 92.4 | 92.3 | 91.6 | 93 |
| Haze (%) | 0.3 | 4.1 | 4.5 | 6.0 | 2.3 | 92.3 |
| Film thickness (μm) | 63 | 250 | 214 | 215 | 102 | 200 |
| Tg (°C) | 147.6 | 141.5 | 142.7 | 138.6 | 127.9 | 2 peaks |
| Appearance | transparent | transparent | transparent | transparent | transparent | opaque |

Table 3

| | | Ex. 1 | Ex. 2 | Ex. 3 | Ex. 4 | Ex. 5 |
|---|---|---|---|---|---|---|
| Type of film | | PR1 | PR2 | PR3 | PR4 | PR5 |
| Stretching temperature (°C) | | 158 | 152 | 153 | 149 | 138 |
| Stretch ratio (times) | | 2.03 | 2.00 | 2.00 | 2.00 | 1.95 |
| Normalized retardation value of transmitted light (Re/d, $\times 10^{-4}$) | 400 nm | 12.4 | 9.0 | 9.7 | 8.1 | 7.22 |
| | 550 nm | 13.1 | 9.6 | 10.4 | 8.7 | 8.17 |
| | 800 nm | 13.5 | 9.9 | 10.8 | 9.0 | 8.53 |
| Wavelength dispersion of retardation (Re/Re550) | 400 nm | 0.95 | 0.94 | 0.93 | 0.93 | 0.90 |
| | 800 nm | 1.03 | 1.03 | 1.04 | 1.04 | 1.06 |

Re: retardation (nm), d: film thickness (μm)

## Claims

1. A thermoplastic resin composition comprising:

(A) a cycloolefin-based polymer, and
(B) a vinyl-based polymer having a structural unit represented by the following formula (II):

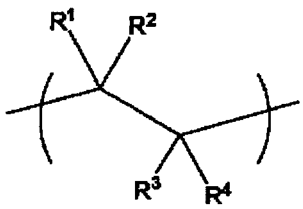

(II)

wherein at least one of $R^1$, $R^2$, $R^3$ and $R^4$ is a group having an amide moiety represented by the following formula (III), and the remainder of $R^1$, $R^2$, $R^3$ and $R^4$, if any, are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group,

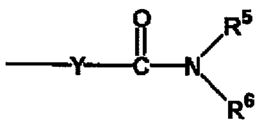

(III)

wherein $R^5$ and $R^6$ are each independently a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, or a polar group, and may be bonded to each other to form a monocyclic or polycyclic group which may have a hetero atom, or may be united to form a divalent hydrocarbon group, and Y is a divalent

hydrocarbon group of 1 to 10 carbon atoms or a divalent aromatic ring.

**2.** The thermoplastic resin composition as claimed in claim 1, wherein the cycloolefin-based polymer (A) is a polymer obtained from a monomer represented by the following formula (I):

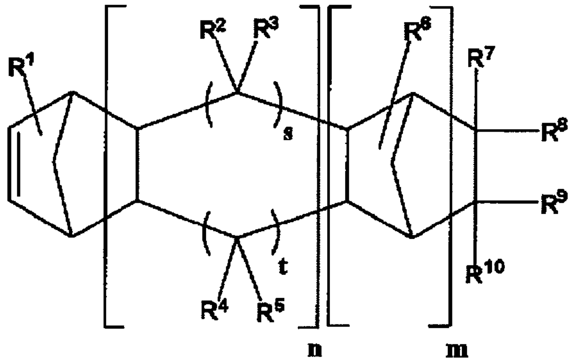

(I)

wherein m, n, s and t are each independently an integer of 0 to 2, $R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$, $R^8$, $R^9$ and $R^{10}$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, and may be bonded to each other to form a monocyclic or polycyclic group which may have a hetero atom, $R^7$ and $R^8$, or $R^9$ and $R^{10}$ may be united to form a divalent hydrocarbon group, and $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure).

**3.** The thermoplastic resin composition as claimed in claim 1 or 2, wherein the cycloolefin-based polymer (A) has a structural unit represented by the following formula (IV):

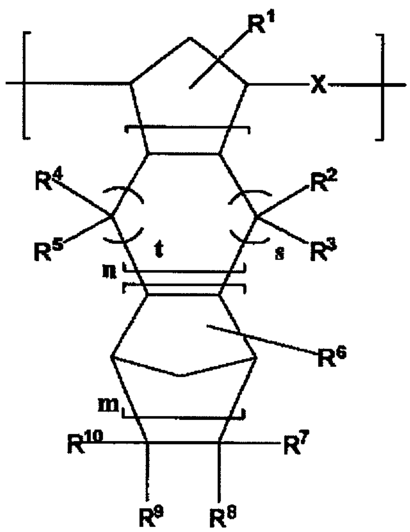

(IV)

wherein m, n, s and t are each independently an integer of 0 to 2, $R^1$, $R^2$, $R^3$, $R^4$, $R^5$ and $R^6$ are each independently an atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, $R^7$, $R^8$, $R^9$ and $R^{10}$ are each independently an

atom or a group selected from the group consisting of a hydrogen atom, a halogen atom, a substituted or unsubstituted hydrocarbon group of 1 to 30 carbon atoms which may have a linkage containing an oxygen atom, a nitrogen atom, a sulfur atom or a silicon atom, and a polar group, and may be bonded to each other to form a monocyclic or polycyclic group which may have a hetero atom, $R^7$ and $R^8$, or $R^9$ and $R^{10}$ may be united to form a divalent hydrocarbon group, $R^7$ or $R^8$, and $R^9$ or $R^{10}$ may be bonded to each other to form a carbon ring or a heterocyclic ring (said carbon ring or said heterocyclic ring may have a monocyclic structure or may be condensed with another ring to form a polycyclic structure), X is a group represented by the formula -CH=CH- or a group represented by the formula $-CH_2CH_2-$, and plural X may be the same or different.

**4.** The thermoplastic resin composition as claimed in any one of claims 1 to 3, wherein the vinyl-based polymer (B) is obtained by mixing a vinyl-based polymer (C) obtained from a polar group-containing monomer and an aromatic vinyl-based monomer with a compound represented by the following formula (V):

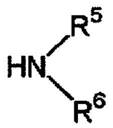

(V)

wherein $R^5$ and $R^6$ have the same meanings as those of $R^5$ and $R^6$ in the formula (III).

**5.** The thermoplastic resin composition as claimed in claim 4, wherein the polar group-containing monomer is an acid anhydride-containing monomer.

**6.** The thermoplastic resin composition as claimed in any one of claims 1 to 5, wherein the vinyl-based polymer (B) is contained in an amount of 20 to 200 parts by weight based on 100 parts by weight of the cyclopolyolefin-based polymer (A).

**7.** An optical film containing the thermoplastic resin composition of any one of claims 1 to 6 as a main component.

**8.** The optical film as claimed in claim 7, which gives retardation to a transmitted light.

**9.** The optical film as claimed in claim 8, which has properties that the ratio of a retardation Re(400) at a wavelength of 400 nm to a retardation Re(550) at a wavelength of 550 nm, Re(400)/Re(550), is in the range of 1.0 to 0.1, and the ratio of a retardation Re(800) at a wavelength of 800 nm to a retardation Re(550) at a wavelength of 550 nm, Re(800)/Re(550), is in the range of 1.5 to 1.0.

**10.** A process for producing an optical film, comprising forming the thermoplastic resin composition of any one of claims 1 to 6 into the film using a solution casting method.

**11.** A process for producing an optical film, comprising forming the thermoplastic resin composition of any one of claims 1 to 6 into the film using a melt extrusion method.

Fig. 1

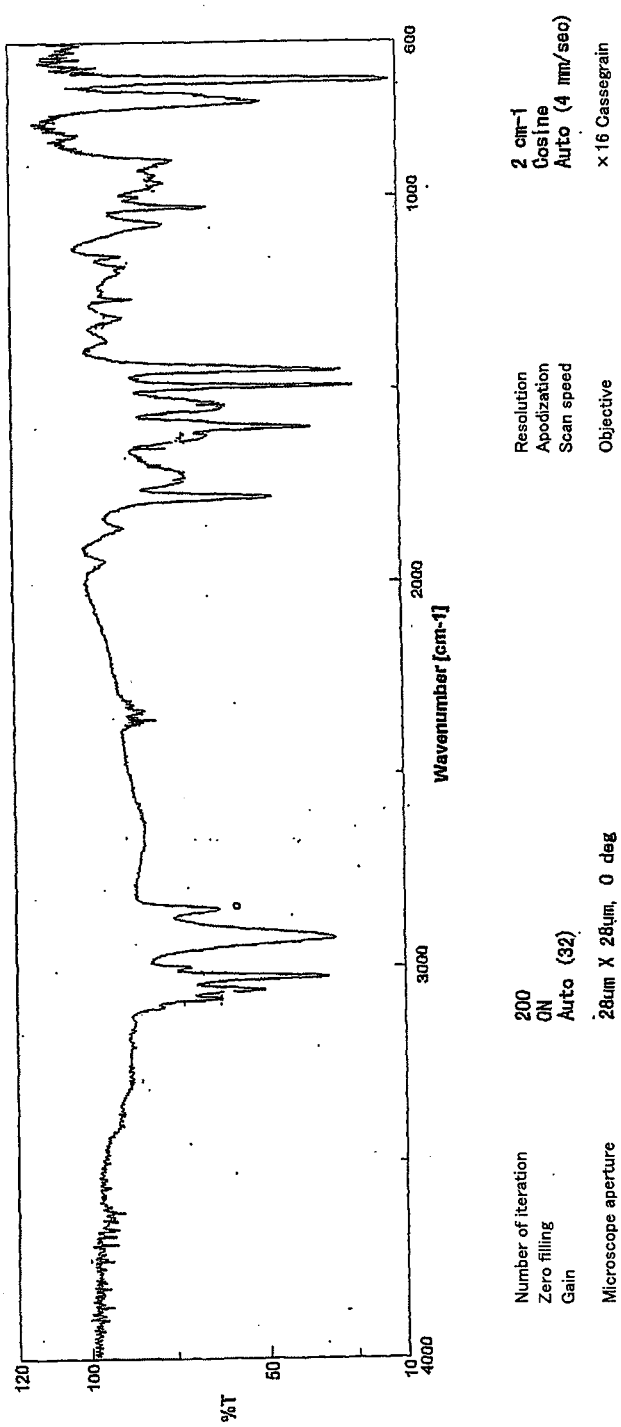
%T
120
100
50
10
4000
3000
2000
1000
600
Wavenumber [cm-1]
Number of iteration 200
Zero filling ON
Gain Auto (32)
Microscope aperture 28um X 28μm, 0 deg
Resolution 2 cm-1
Apodization Cosine
Scan speed Auto (4 mm/sec)
Objective ×16 Cassegrain

Fig. 2

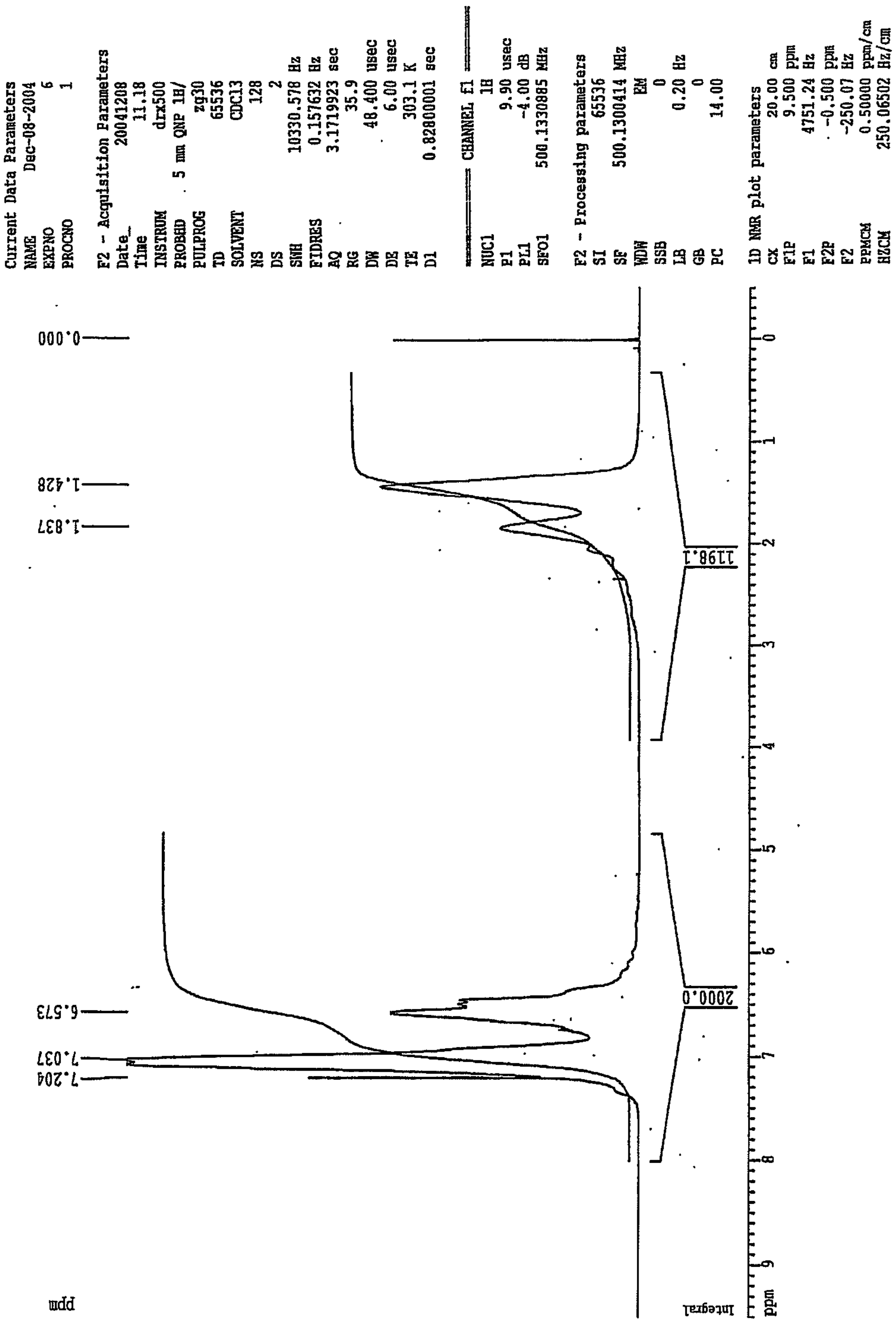
Current Data Parameters
NAME Dec-08-2004
EXPNO 6
PROCNO 1
F2 - Acquisition Parameters
Date_ 20041208
Time 11.18
INSTRUM drx500
PROBHD 5 mm QNP 1H/
PULPROG zg30
TD 65536
SOLVENT CDCl3
NS 128
DS 2
SWH 10330.578 Hz
FIDRES 0.157632 Hz
AQ 3.1719923 sec
RG 35.9
DW 48.400 usec
DE 6.00 usec
TE 303.1 K
D1 0.82800001 sec
CHANNEL f1
NUC1 1H
P1 9.90 usec
PL1 -4.00 dB
SFO1 500.1330885 MHz
F2 - Processing parameters
SI 65536
SF 500.1300414 MHz
WDW EM
SSB 0
LB 0.20 Hz
GB 0
PC 14.00
1D NMR plot parameters
CX 20.00 cm
F1P 9.500 ppm
F1 4751.24 Hz
F2P -0.500 ppm
F2 -250.07 Hz
PPMCM 0.50000 ppm/cm
HZCM 250.06502 Hz/cm
0.000
1.428
1.837
6.573
7.037
7.204
1198.1
2000.0
Integral
ppm

Fig. 3

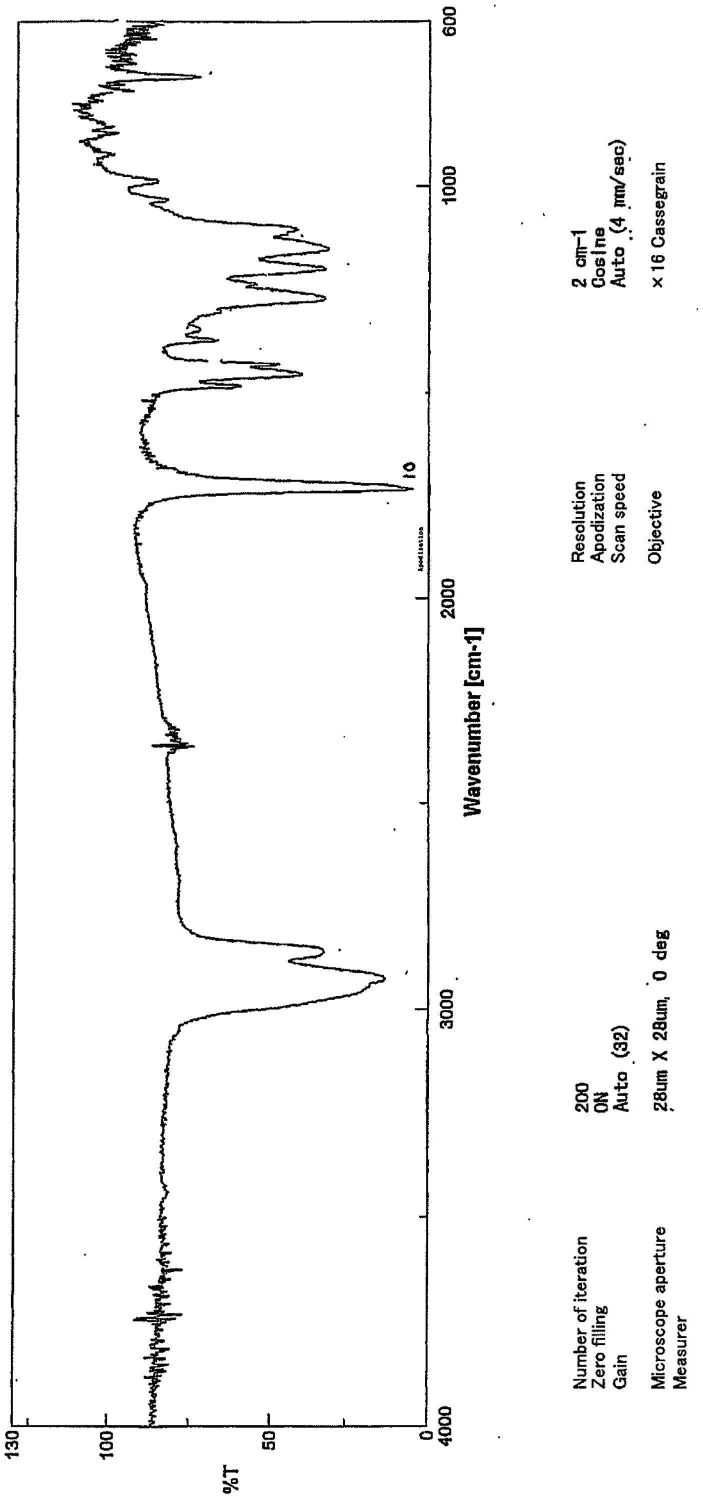
%T
130
100
50
0
4000
3000
2000
1000
600
Wavenumber [cm-1]
Number of iteration 200
Zero filling ON
Gain Auto (32)
Microscope aperture 28um X 28um, 0 deg
Measurer
Resolution 2 cm-1
Apodization Cosine
Scan speed Auto (4 mm/sec)
Objective ×16 Cassegrain

Fig. 4

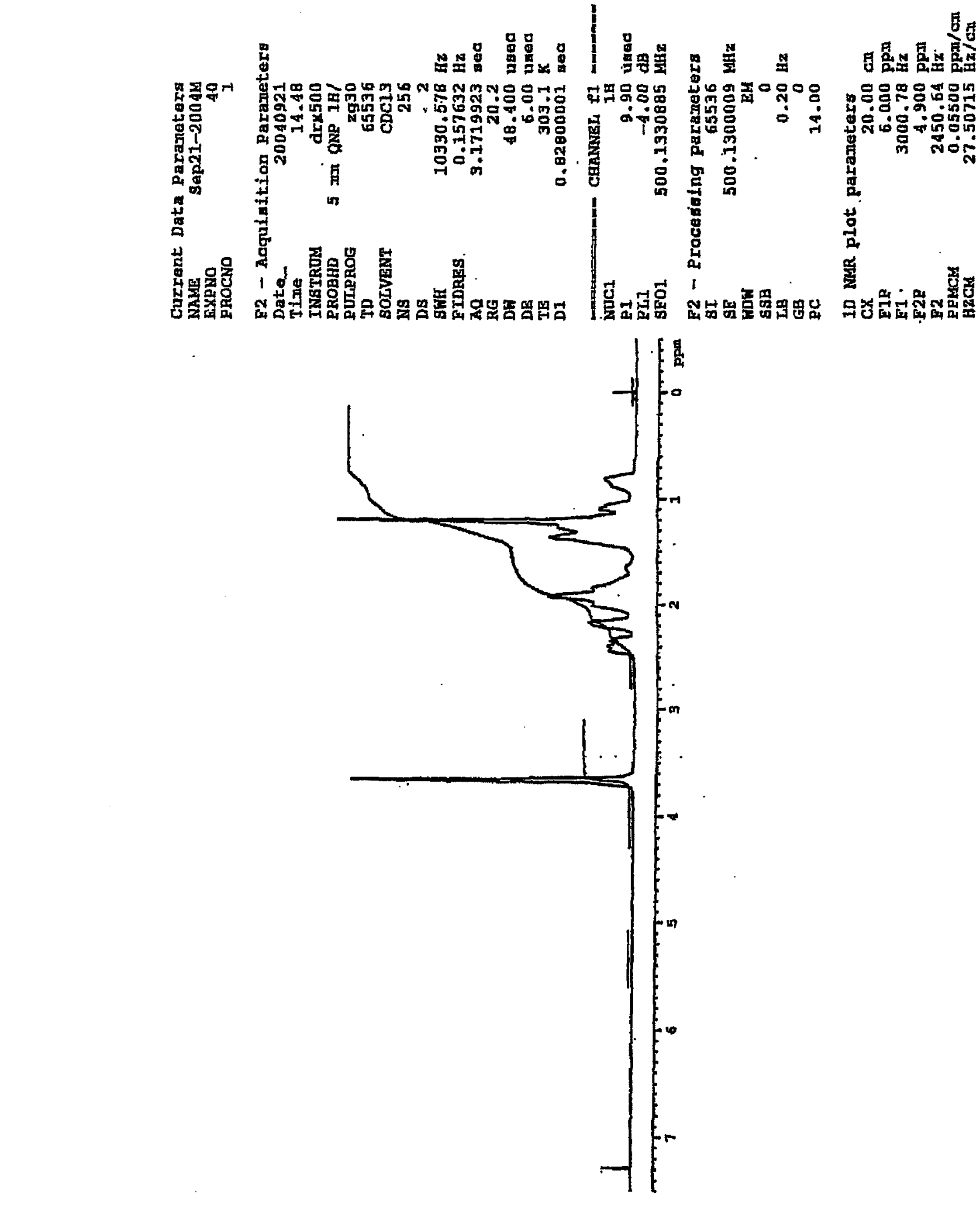

Current Data Parameters
NAME Sep21-2004M
EXPNO 40
PROCNO 1
F2 - Acquisition Parameters
Date_ 20040921
Time 14.48
INSTRUM drx500
PROBHD 5 mm QNP 1H/
PULPROG zg30
TD 65536
SOLVENT CDCl3
NS 256
DS 2
SWH 10330.578 Hz
FIDRES 0.157632 Hz
AQ 3.1719923 sec
RG 20.2
DW 48.400 usec
DE 6.00 usec
TE 303.1 K
D1 0.82800001 sec
CHANNEL f1
NUC1 1H
P1 9.90 usec
PL1 -4.00 dB
SFO1 500.1330885 MHz
F2 - Processing parameters
SI 65536
SF 500.1300009 MHz
WDW EM
SSB 0
LB 0.20 Hz
GB 0
PC 14.00
1D NMR plot parameters
CX 20.00 cm
F1P 6.000 ppm
F1 3000.78 Hz
F2P 4.900 ppm
F2 2450.64 Hz
PPMCM 0.05500 ppm/cm
HZCM 27.50715 Hz/cm
ppm
0
1
2
3
4
5
6
7

Fig. 5

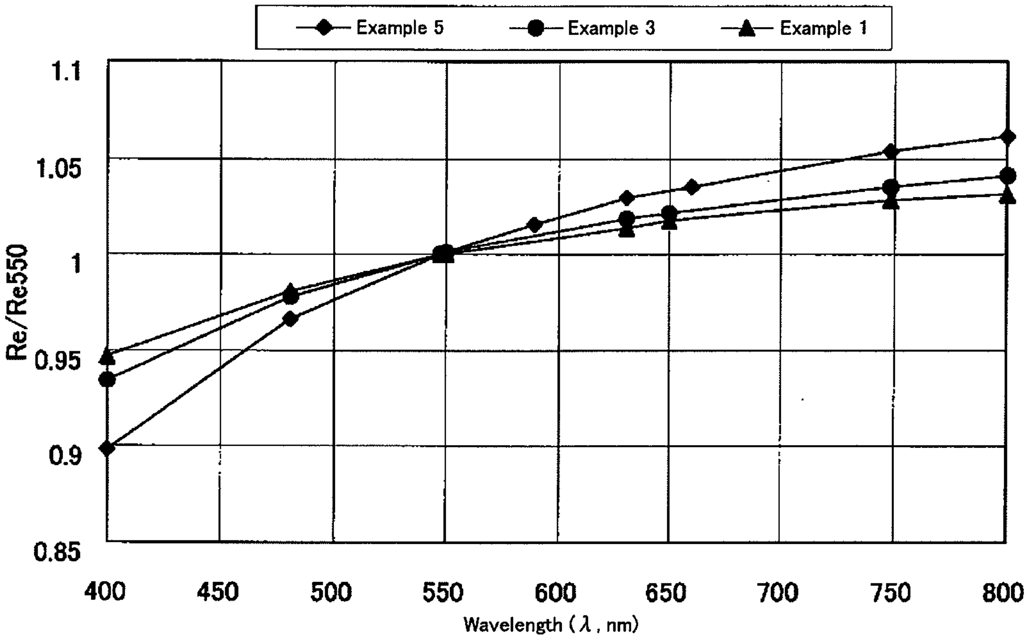
Example 5
Example 3
Example 1
1.1
1.05
1
0.95
0.9
0.85
Re/Re550
400
450
500
550
600
650
700
750
800
Wavelength (λ, nm)

**INTERNATIONAL SEARCH REPORT**

International application No.
PCT/JP2005/023977

A. CLASSIFICATION OF SUBJECT MATTER
*C08L65/00*(2006.01), *C08J5/18*(2006.01), *C08L33/24*(2006.01), *G02B5/30* (2006.01)

According to International Patent Classification (IPC) or to both national classification and IPC

B. FIELDS SEARCHED

Minimum documentation searched (classification system followed by classification symbols)
*C08L65/00*(2006.01), *C08J5/18*(2006.01), *C08L33/24*(2006.01), *G02B5/30* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-323098 A (JSR Corp.), 26 November, 1999 (26.11.99), Full text (Family: none) | 1-11 |
| X | JP 2000-219725 A (Nippon Zeon Co., Ltd.), 08 August, 2000 (08.08.00), Full text (Family: none) | 1-11 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March, 2006 (08.03.06) | 20 March, 2006 (20.03.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1132625 A
- JP 1132626 A
- JP 63218726 A
- JP 2133413 A
- JP 61120816 A
- JP 61115912 A
- JP 4245202 A
- JP 5002108 A
- JP 5064865 A
- JP 5212828 A
- JP 6051117 A
- JP 7077608 A
- JP 5061026 A
- JP 2000137116 A
- JP 2000337222 A
- JP 1240517 A

### Non-patent literature cited in the description


- *Japanese Journal of Polymer Science and Technology,* 2004, vol. 61 (1), 89-94
- **K.J. IVIN ; J.C. MOL.** Olefin Metathesis and Metathesis Polymerization. Academic Press, 1997